# EUROPEAN PATENT APPLICATION

(11) **EP 4 636 760 A1**
(43) Date of publication of application: **22.10.2025**
(21) Application number: 23903064.6
(22) Date of filing: 27.09.2023
(51) Int. Cl.: G10L 21/007, G10L 25/21, G10L 25/30, G10L 25/90

(54) **INFORMATION PROCESSING DEVICE, INFORMATION PROCESSING METHOD, COMPUTER PROGRAM, LEARNING DEVICE, REMOTE CONFERENCE SYSTEM, AND SUPPORT DEVICE**

(30) Priority: 14.12.2022 JP 2022199766
(71) Applicant: Sony Group Corporation, Tokyo 108-0075 (JP)
(72) Inventor: REKIMOTO, Junichi, Tokyo 141-0022 (JP)
(74) Representative: 2SPL Patentanwälte PartG mbB
(86) International application number: PCT/JP2023/035172
(87) International publication number: WO 2024/127763

(57) **Abstract**

Provided is an information processing device that perform processing related to speech conversion of a speech that is not normally uttered and does not include pitch information such as a whisper or a faint speech.

The information processing device includes a speech-to-unit encoder that generates an acoustic unit from a speech waveform, and a unit-to-speech decoder that reconstructs a speech waveform from an acoustic unit. The unit-to-speech decoder is subjected to preliminary learning by self-supervised learning of a Masked Language Model type using a normal speech and a whisper without a text label of a specific speaker to generate an acoustic unit common to the normal speech and the whisper, the acoustic unit being a latent expression in which a difference between the normal speech and the whisper is absorbed.

## Description

### TECHNICAL FIELD

The technology disclosed in the present specification (referred to below as "the present disclosure") relates to an information processing device and an information processing method that perform processing related to speech conversion, a computer program, a learning device, a remote conference system, and a support device.

### BACKGROUND ART

Although speech interaction interfaces are widely used, they are difficult to be used in places where others exist. This is because making a speech in a public environment causes trouble to others, and confidential information may be leaked. Even in a case where a remote conference is held in a public environment, speaking in the remote conference is difficult due to a similar reason. Public environments allow only whispers at most. Then, persons with speech impairment and persons with hearing impairment can only generate faint speeches or speeches with irregular prosody.

Environments or persons allowed to utter only whispers or faint speeches desire a speech conversion technology capable of conversion into a normal speech. However, although converting a normal speech into a whisper is relatively easy, converting a whisper into a normal speech is difficult because the whisper includes no pitch information.

Although various types of silent speech input technology, i.e., silent speech interface (SSI), have been proposed (e.g., see Non Patent Document 1), special sensor configuration is used to obtain oral information at the time of occurrence in many cases. Thus, a learning data set with a text for recognition needs to be collected for each sensor configuration and each speaker, so that a preparation load for using the technology increases. Additionally, the SSI technology existing has insufficient recognition accuracy and remains at a level of recognizing a predefined command, so that conversion of an unvoiced speech into a normal speech without limitation of vocabulary and language is not achieved.

Then, although a speech conversion device that converts a whisper uttered in a whisper into a normal speech uttered by a normal utterance method has been proposed (see Patent Document 1), this speech conversion device needs to be used by collecting a learning data set with a text for recognition for each speaker, and thus a preparation load increases as in the SSI technology described above.

### CITATION LIST

### PATENT DOCUMENT

Patent Document 1: JP H10-254473A

### NON PATENT DOCUMENT

Non Patent Document 1: Abdelkareem Bedri, Himanshu Sahni, Pavleen Thukral, Thad Starner, David Byrd, Peter Presti, Gabriel Reyes, Maysam Ghovanloo, and Zehua Guo. Toward silentspeech control of consumer wearables. Computer, Vol. 48, No. 10, pp.54-62, 2015.
Non Patent Document 2: Wei-Ning Hsu, Benjamin Bolte, Yao-Hung Hubert Tsai, Kushal Lakhotia, Ruslan Salakhutdinov, and Abdelrahman Mohamed. 2021. HuBERT: Self-Supervised Speech Representation Learning by Masked Prediction of Hidden Units. (June2021). arXiv:2106.07447 [cs.CL]
Non Patent Document 3: Jacob Devlin, Ming-Wei Chang, Kenton Lee, and Kristina Toutanova. Bert: Pre-training of deep bidirectional transformers for language understanding, 2018.
Non Patent Document 4: Vassil Panayotov, Guoguo Chen, Daniel Povey, and Sanjeev Khudanpur. Librispeech: An asr corpus based on public domain audio books. In 2015 IEEE International Conference on Acoustics, Speech and Signal Processing (ICASSP), pp. 5206-5210, 2015.
Non Patent Document 5: Boon Pang Lim. 2010. Computational differences between whispered and non-whispered speech. Ph.D. Dissertation. University of Illinois Urbana-Champaign.
Non Patent Document 6: Yi Ren, Chenxu Hu, Xu Tan, Tao Qin, Sheng Zhao, Zhou Zhao, and Tie-Yan Liu. Fastspeech 2: Fast and high-quality end-to-end text to speech, 2020.
Non Patent Document 7: Jungil Kong, Jaehyeon Kim, and Jaekyoung Bae. Hifigan: Generative adversarial networks for efficient and high fidelity speech synthesis, 2020.
Non Patent Document 8: Lisa Lucks Mendel, Sungmin Lee, Monique Pousson, ChhayakantaPatro, Skylar McSorley, Bonny Banerjee, Shamima Najnin, and Masoumeh Heidari Kapourchali. Corpus of deaf speech for acoustic and speech production research. The Journal of the Acoustical Society of America, Vol. 142, No. (1), p. EL102, 2017.

### SUMMARY OF THE INVENTION

### PROBLEMS TO BE SOLVED BY THE INVENTION

It is desirable to provide an information processing device and an information processing method that perform processing related to speech conversion of a speech that is not normally uttered and does not include pitch information such as a whisper or a faint speech, a computer program, a learning device, a remote conference system, and a support device.

### SOLUTIONS TO PROBLEMS

The present disclosure is made in view of the above problems, and a first aspect thereof is
an information processing device including:
a speech-to-unit encoder that generates an acoustic unit from a speech waveform; and
a unit-to-speech decoder that reconstructs a speech waveform from an acoustic unit.

The unit-to-speech decoder is subjected to preliminary learning by self-supervised learning of a Masked Language Model type using a normal speech and a whisper without an accompanying text label of a specific speaker to generate an acoustic unit common to the normal speech and the whisper, the acoustic unit being a latent expression in which a difference between the normal speech and the whisper is absorbed.

The unit-to-speech decoder is subjected to preliminary learning to generate a mel-spectrogram of a target speech from the acoustic unit. Additionally, the unit-to-speech decoder further includes a vocoder that reconstructs the mel-spectrogram into a speech waveform.

The unit-to-speech decoder is subjected to preliminary learning using a first loss function based on a difference between the mel-spectrogram obtained by converting an acoustic unit with the unit-to-speech decoder, the acoustic unit being generated from the target speech by the speech-to-unit encoder, and the mel-spectrogram generated from the target speech.

Additionally, the unit-to-speech decoder includes a pitch predictor that predicts prosody of speech from an acoustic unit and an energy predictor that predicts acoustic intensity from the acoustic unit. Then, preliminary learning of the pitch predictor and the energy predictor using a second loss function is also performed, the second loss function being based on a difference between prosody and acoustic intensity predicted for an acoustic unit by the pitch predictor and the energy predictor, respectively, the acoustic unit being generated from the target speech by the speech-to-unit encoder, and prosody and acoustic intensity directly extracted from the target speech.

Additionally, a second aspect of the present disclosure is
an information processing method including:
a speech-to-unit conversion step of generating an acoustic unit from a speech waveform; and
a unit-to-speech conversion step of reconstructing a speech waveform from an acoustic unit.

Then, a third aspect of the present disclosure is
a computer program that is described in a computer-readable format to allow a computer to function as:
a speech-to-unit encoder that generates an acoustic unit from a speech waveform; and
a unit-to-speech decoder that reconstructs a speech waveform from an acoustic unit.

The computer program according to the third aspect of the present disclosure is obtained by defining a computer program described in a computer-readable format to implement predetermined processing on a computer. The computer program can be provided for a purpose computer capable of executing various program codes by a storage medium provided in a computer-readable form, or a communication medium, for example, a storage medium such as an optical disk, a magnetic disk, or a semiconductor memory, or a communication medium such as a network. Then, the computer program according to the third aspect of the present disclosure installed in a computer using any one of the media exerts a cooperative action on the computer, so that similar operational effects to those of the information processing device according to the first aspect of the present disclosure can be obtained.

Additionally, a fourth aspect of the present disclosure is
a learning device that learns a speech-to-unit encoder that generate an acoustic unit from a speech waveform,
the learning device being configured to learn the speech-to-unit encoder to generate an acoustic unit common to a normal speech and a whisper, the acoustic unit being a latent expression in which a difference between the normal speech and the whisper is absorbed, by self-supervised learning of a Masked Language Model type using a normal speech and a whisper in which a part of an input is masked and the masked part is estimated from other related information.

Then, a fifth aspect of the present disclosure is
a learning device that learns a unit-to-speech decoder that reconstructs a speech waveform from an acoustic unit, the learning device being configured to learn the unit-to-speech decoder using a first loss function based on a difference between a mel-spectrogram generated by the unit-to-speech decoder using an acoustic unit generated from a target speech using a frozen model and a mel-spectrogram generated from the target speech.

Additionally, a sixth aspect of the present disclosure is
a remote conference system including:
multiple conference terminals that are interconnected; and
a speech conversion device that converts a speech input by each of the conference terminals,
the speech conversion device including: a speech-to-unit encoder that generates an acoustic unit independent of an utterance method from a speech waveform; and a unit-to-speech decoder that reconstructs a speech waveform of a target speaker from an acoustic unit.

However, the term, "system", as used herein refers to a logical assembly of multiple devices (or functional modules that implement specific functions), and each of the devices or functional modules may be or may be not in a single housing. That is, one device including multiple components or functional modules and an assembly of multiple devices correspond to the "system".

Then, a seventh aspect of the present disclosure is
a support device including:
a speech collector that collects a speech of a speaker;
a speech converter that converts a speech input in the speech collector; and
a speech output unit that reproduces and outputs the speech converted by the speech converter,
the speech converter including: a speech-to-unit encoder that generates an acoustic unit independent of an utterance method from a speech waveform; and a unit-to-speech decoder that reconstructs a speech waveform of a target speaker from an acoustic unit.

### EFFECTS OF THE INVENTION

An embodiment of the present disclosure enables providing an information processing device and an information processing method, a computer program, a learning device, a remote conference system, and a support device that perform processing of converting a whisper, a faint speech, or the like into a normal speech of a target speaker.

Note that the effects described in the present specification are merely examples, and the effects brought by the present disclosure are not limited thereto. Furthermore, an embodiment of the present disclosure may further provide additional effects in addition to the effects described above.

Still another object, feature, and advantage of the present disclosure will become clear by further detailed description with reference to an embodiment to be described later and the attached drawings.

### BRIEF DESCRIPTION OF DRAWINGS

Fig. 1 is a diagram illustrating a configuration of a speech conversion device 100.
Fig. 2 is a diagram illustrating a preliminary learning method of a speech-to-unit encoder 110.
Fig. 3 is a diagram illustrating a result of comparing outputs of respective transformer layers in the speech-to-unit encoder 110 after preliminary learning.
Fig. 4 is a diagram illustrating a configuration example of an automatic speech recognizer 400 to which the speech-to-unit encoder 110 is applied.
Fig. 5 is a diagram illustrating comparison between configurations of an original FastSpeech2 and a unit-to-speech decoder 120.
Fig. 6 is a diagram illustrating learning of the speech-to-unit encoder 110 and the unit-to-speech decoder 120.
Fig. 7 is a flowchart illustrating a processing procedure for allowing the unit-to-speech decoder 120 to preliminarily learn.
Fig. 8 is a diagram illustrating evaluation results of conversion quality from a whisper to a normal speech using the speech conversion device 100.
Fig. 9 is a diagram illustrating evaluation results of conversion quality from a whisper to a normal speech using the speech conversion device 100.
Fig. 10 is a diagram illustrating evaluation results of conversion quality from a whisper to a normal speech using the speech conversion device 100.
Fig. 11 is a diagram illustrating a functional configuration for using the speech conversion device 100 as a speech recognizer.
Fig. 12 is a diagram illustrating a functional configuration for using the speech conversion device 100 as a speech recognizer.
Fig. 13 is a diagram illustrating evaluation results of speech quality improvement of a person with speech impairment using the speech conversion device 100.
Fig. 14 is a diagram illustrating evaluation results of speech quality improvement of a person with speech impairment using the speech conversion device 100.
Fig. 15 is a diagram illustrating evaluation results of speech quality improvement of a person with speech impairment using the speech conversion device 100.
Fig. 16 is a diagram illustrating evaluation results of speech reconstruction of a person with hearing impairment using the speech conversion device 100.
Fig. 17 is a diagram illustrating evaluation results of speech reconstruction of a person with hearing impairment using the speech conversion device 100.
Fig. 18 is a diagram illustrating evaluation results of speech reconstruction of a person with hearing impairment using the speech conversion device 100.
Fig. 19 is a diagram illustrating a configuration example of an information processing device 2000.
Fig. 20 is a diagram illustrating a remote conference system configured by applying an embodiment of the present disclosure.
Fig. 21 is a diagram illustrating a modification of the remote conference system configured by applying an embodiment of the present disclosure.
Fig. 22 is a diagram illustrating an example of a functional configuration of a server 2100.
Fig. 23 is a diagram illustrating an example of a configuration of a classification device 2201.
Fig. 24 is a diagram illustrating an example of a functional configuration of an utterance support device 2400 to which an embodiment of the present disclosure is applied.
Fig. 25 is a diagram illustrating a functional configuration of another utterance support device 2500 to which an embodiment of the present disclosure is applied.
Fig. 26 is a diagram illustrating a functional configuration of a speech input interface 2600 using speech conversion technology according to an embodiment of the present disclosure.
Fig. 27 is a diagram illustrating an operation example of a smartphone 2700 to which a speech conversion function according to an embodiment of the present disclosure is applied.
Fig. 28 is a diagram illustrating an example of a functional configuration of an avatar control system 2800.

### MODE FOR CARRYING OUT THE INVENTION

Hereinafter, the present disclosure will be described in the following order with reference to the drawings.

A. Overview
B. Configuration of speech conversion device
   B-1. Speech-to-unit encoder
   B-2. Unit-to-speech decoder
   B-3. Learning of unit-to-speech decoder
C. Evaluation of conversion quality
   C-1. Conversion quality from whisper to normal speech
   C-2. Evaluation of utterance correction of person with speech impairment and person with hearing impairment
   C-3. Evaluation of speech reconstruction of person with hearing impairment
D. Configuration of information processing device
E. Application example
   E-1. Application to remote conference system
   E-2. Application to support device
   E-3. Application to speech input interface
   E-4. Application to smartphone
   E-5. Application to avatar control system

### A. Overview

Although a whisper has high confidentiality because of its low sound pressure, it can be collected with a normal microphone and does not require a special sensor configuration. Then, even in a case of a person with speech impairment having vocal cords damaged, the person can speak in a whisper or a faint speech. Thus, the present disclosure proposes a speech conversion technique for converting a whisper into a normal speech in view of characteristics of the whisper. The present disclosure can be used as, for example, a speech interface in a public environment where a speech cannot be uttered, or can be used as a support device for a person with speech impairment or a person with hearing impairment.

The speech conversion technology according to an embodiment of the present disclosure enables speech conversion from a whisper to a normal speech in a speaker-independent manner, a language-independent manner, and in real time by self-supervised learning. The speech conversion technology according to an embodiment of the present disclosure is configured to learn only with speech data on a whisper and a normal speech that are not paired, and thus requiring no text label attached to the speech data or no parallel data corresponding to the whisper and the normal speech. Thus, a preparation load for using the speech conversion technology according to an embodiment of the present disclosure is reduced.

Specifically, the speech conversion device according to an embodiment of the present disclosure includes a speech-to-unit encoder (STU) that generates an acoustic unit from an input speech waveform, and a unit-to-speech decoder (UTS) that reconstructs a target speech waveform of a specific speaker from the acoustic unit.

The speech-to-unit encoder preliminarily learns a normal speech and a whisper to generate a common (i.e., independent of an utterance method) acoustic unit to the normal speech and the whisper, the common acoustic unit being a latent expression absorbing a difference between the normal speech and the whisper.

The unit-to-speech decoder can learn only from speech data on a specific speaker without an accompanying text label. For example, for a person whose vocal cord is extracted, a normal speech before extraction can be reconstructed from a whisper after the extraction by causing the unit-to-speech decoder to learn using speech data on the person itself left before the extraction. Additionally, the unit-to-speech decoder can learn to convert a speech into a speech of any other person.

The speech-to-unit encoder and the unit-to-speech decoder operate in a non-autoregressive manner, so that the entire speech conversion device according to an embodiment of the present disclosure operates in real time. For example, in a case where the entire speech conversion device according to an embodiment of the present disclosure is applied to a remote conference system, speaking in a whisper of a conference participant can be converted in real time to allow other conference participants to hear the speaking in a normal speech.

### B. Configuration of speech conversion device

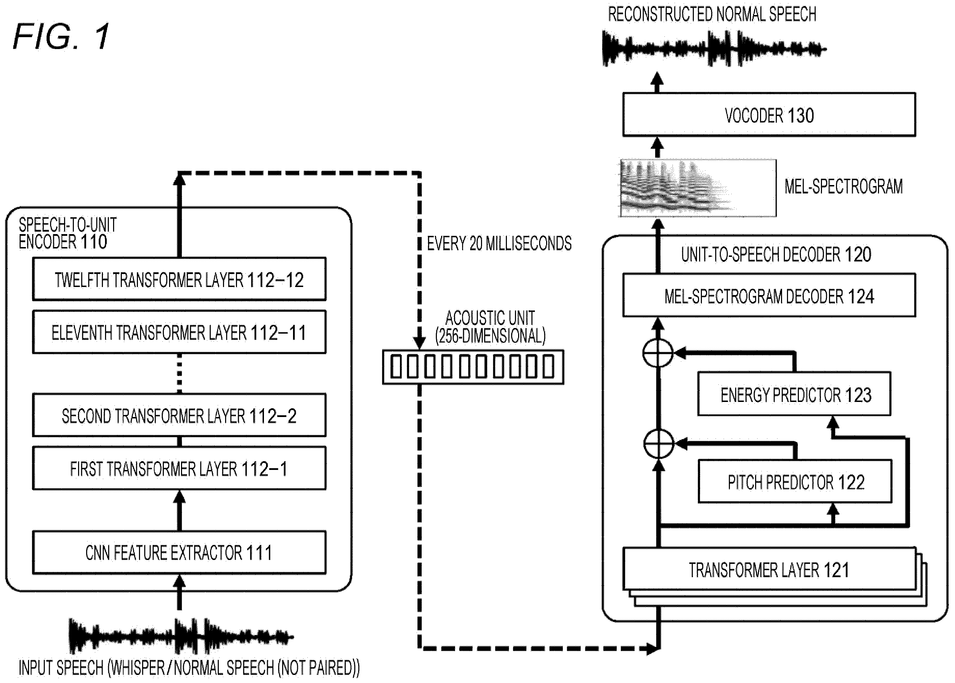

Fig. 1 illustrates a configuration of a speech conversion device 100 to which an embodiment of the present disclosure is applied. The speech conversion device 100 illustrated includes a speech-to-unit encoder (STU) 110 and a unit-to-speech decoder (UTS) 120.

The speech-to-unit encoder 110 is subjected to preliminary learning with a normal speech and a whisper to generate a common acoustic unit to the normal speech and the whisper, the common acoustic unit being a latent expression absorbing a difference between the normal speech and the whisper. For example, the common acoustic unit is a 256-dimensional vector and is generated every 20 milliseconds.

Next, the unit-to-speech decoder 120 converts the acoustic unit generated by the speech-to-unit encoder 110 every 20 milliseconds into speech information on a target speaker. However, the present embodiment allows the unit-to-speech decoder 120 to output a mel-spectrogram as the speech information on the target speaker instead of a speech waveform.

Here, the mel-spectrogram is a log-mel spectrogram in which a mel-filter bank is applied to a linear spectrogram, the mel-filter bank being configured to extract only a specific frequency band at equal intervals on a mel-scale, by focusing on the fact that a sound close to an upper limit of an audible range sounds lower than an actual sound. Thus, a vocoder 130 is further used to reconstruct a target speech waveform of a specific speaker from the mel-spectrogram output from the unit-to-speech decoder 120.

The speech-to-unit encoder 110 has one feature in that commonality (i.e., as a latent expression absorbing a difference between the normal speech and the whisper) of acoustic units is achieved only from preliminary learning using data on a whisper and a normal speech that are not paired.

For example, the speech conversion device 100 can be mounted on an information processing device such as a personal computer. In this case, the speech-to-unit encoder 110 and the unit-to-speech decoder 120 can be constructed by combining a plurality of library computer programs. Specifically, the speech conversion device 100 can be constructed using an artificial intelligence (AI) framework such as Pytorch. As a matter of course, the speech-to-unit encoder 110 and the unit-to-speech decoder 120 can be implemented as dedicated hardware devices instead of software.

### B-1. Speech-to-unit encoder

The speech-to-unit encoder 110 is configured to receive a speech waveform as an input and output the speech waveform. Although the input of the speech waveform includes a whisper and a normal speech, the speech-to-unit encoder 110 generates a common acoustic unit in which a difference between the normal speech and the whisper is absorbed. That is, an almost identical acoustic unit is generated from a speech uttering the same character, regardless of whether the speech is a normal speech or a whisper.

Fig. 1 illustrates an example in which the speech-to-unit encoder 110 includes a convolutional neural network (CNN) feature extractor 111 and a plurality of (twelve in the example illustrated in Fig. 1) transformer layers 112-1, 112-2,..., and 112-12 disposed at subsequent stages of the CNN feature extractor 111.

The CNN is well known, and includes a feature extractor at a preceding stage and a classifier at a subsequent stage. The feature extractor repeats convolution operation and pooling of a filter for input data to extract a feature vector from the input data. The classifier performs labeling on the feature vector. The CNN feature extractor 111 in the speech conversion device 100 receives a speech waveform as an input and outputs a 768-dimensional speech feature vector every 20 milliseconds, for example. The input of the speech waveform here includes a whisper and a normal speech that are not paired. Then, the plurality of transformer layers 112-1, 112-2, 112-3,..., and 112-12 is sequentially processed with the feature vector of the input of the speech waveform, the feature vector being as a latent expression in which a difference between the normal speech and the whisper is absorbed. The 768-dimensional speech feature vector output from the last transformer layer 112-12 is dimensionally compressed into a 256-dimensional vector in a projection layer, and is output to the unit-to-speech decoder 120 as an acoustic unit. However, the number of dimensions of each of the speech feature vector and the final acoustic unit is merely a design matter. For convenience of description, Fig. 1 does not illustrate the projection layer that dimensionally compresses a speech feature vector.

The speech-to-unit encoder 110 can be constructed on the basis of Hidden Unit BERT (HuBERT) (see Non Patent Document 2). The HuBERT is provided as a library computer program. The speech-to-unit encoder 110 according to the present embodiment is based on a self-supervised neural network for speech acquired by self-supervised learning of a Masked Language Model type. Specifically, a speech model for the speech-to-unit encoder 110 capable of generating a common acoustic unit from speech features is acquired by self-supervised learning in which many unlabeled speeches in the HuBERT is preliminary learned as in BERT (see Non Patent Document 3), and a part of a speech feature vector to be an input is masked to estimate the masked part from information of other related parts.

The speech-to-unit encoder 110 desirably absorbs a difference between a whisper and a normal speech, and generates an acoustic unit as similar thereto as possible (i.e., independent of an utterance method). Thus, the present embodiment allows the speech-to-unit encoder 110 to preliminarily learn by mixing a whisper and a normal speech that are not paired. This learning uses learning data such as the following (1) to (3), for example.
(1) Normal English speeches of multiple speakers from Librispeech (see Non Patent Document 4) 960h dataset.
(2) Speeches obtained by mechanically converting speech data in Librispeech into whispers with a speech conversion tool based on an LPC.
(3) Speech data set (English texts, multiple speakers) of normal speeches and whispers for a speech length of 58 hours in wTIMIT (see Non Patent Document 5).

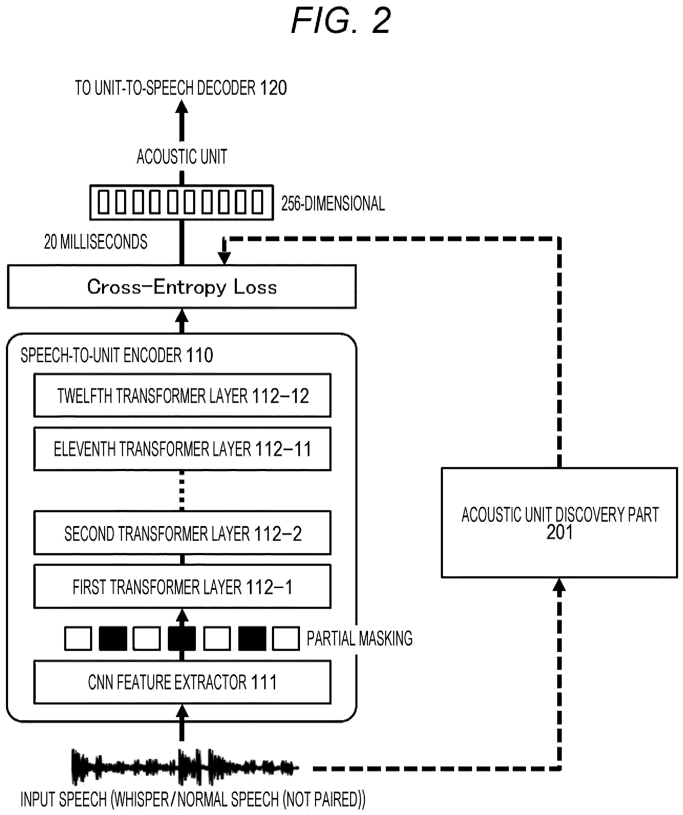

Fig. 2 illustrates a preliminary learning method of the speech-to-unit encoder 110. The speech-to-unit encoder 110 receives a speech waveform of a whisper and a normal speech that are not paired. The CNN feature extractor 111 outputs a speech feature vector that is partially masked. Then, the transformer layers 112-1, 112-2,..., and 112-12 in the subsequent stage learn by estimating a discrete unit of the masked part from the speech feature vector masked. The transformer layers 112-1, 112-2,... in Fig. 2 each preliminarily learn using a loss function (Cross-Entroly Loss) in which a discrete unit of the masked part is directly calculated from the input of the speech waveform by acoustic unit discovery part 201 on the basis of a difference from a discrete unit of the masked part output from the transformer layer 112-12 in a final stage.

The speech-to-unit encoder 110 is subjected to preliminary learning in which a discrete unit obtained by applying k-means clustering to the input speech data is first estimated in a first stage as in the HuBERT. Then, the k-means clustering is applied to output of a transformer intermediate layer to estimate a discrete unit in a second stage. For example, the number of discrete units is fixed to one hundred. The speech-to-unit encoder 110 includes a projection layer (not illustrated) after the transformer intermediate layer, the projection layer being configured to generate a 256-dimensional vector (one every 20 milliseconds) that is set as a common (i.e., independent of an utterance method) acoustic unit.

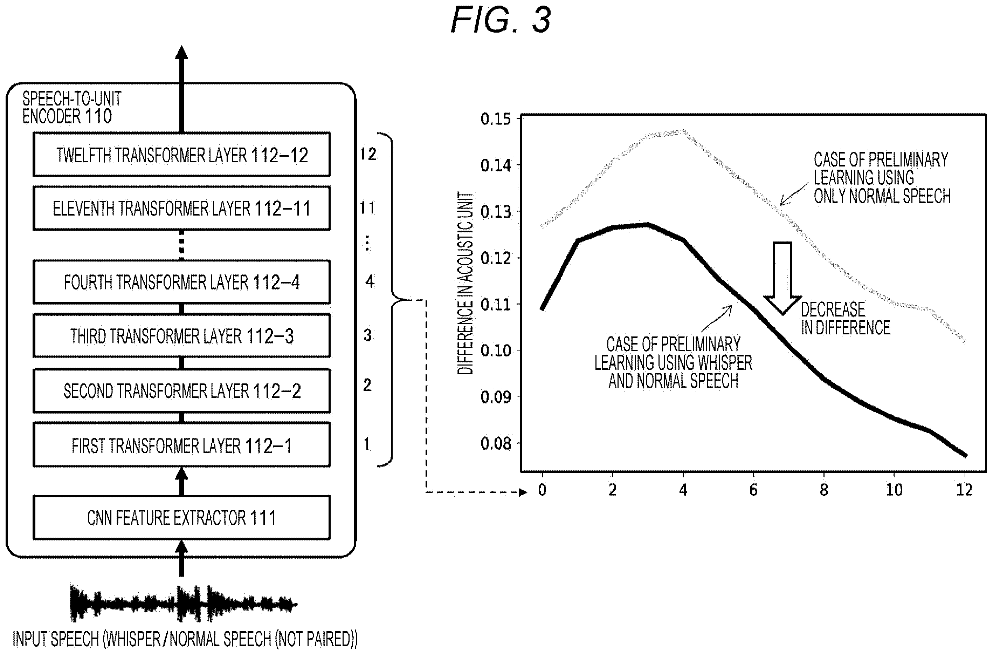

As described above, the speech-to-unit encoder 110 in the present embodiment includes the CNN feature extractor 111 with subsequent stages in which the twelve transformer layers 112-1, 112-2, 112-3,... are disposed. Fig. 3 illustrates a result of comparing outputs of the transformer layers 112-1, 112-2, 112-3,... after the above-described preliminary learning is performed. Fig. 3 has a horizontal axis representing each of the transformer layers 112-1, 112-2,..., and 112-12, and a vertical axis representing a difference between a whisper and a normal speech (a difference between acoustic units when the same character is uttered in a whisper and a normal speech), and indicates a result in a case where the preliminary learning is performed only with the normal speech and a case where the preliminary learning is performed with both the whisper and the normal speech. The following two points (1) and (2) can be found out by comparing the outputs of the transformer layers 112-1, 112-2, 112-3,... after the preliminary learning on the basis of Fig. 3.
(1) Increase in layer depth reduces a difference between acoustic units of a whisper and a normal speech.
(2) Normal speeches decrease more in difference between their acoustic units in a case where the preliminary learning is performed with both the whisper and the normal speech than in a case where the preliminary learning is performed only with the normal speech.

Although speech characteristics close to a waveform such as a mel-spectrogram have a difference between a whisper and a normal speech, the speech characteristics through the speech-to-unit encoder 110 show that an acoustic unit common to utterance methods can be generated in which the difference between the whisper and the normal speech is absorbed. Speech recognition enables acquiring an expression in which a difference between multiple speakers is absorbed by preliminary learning of speaking of a plurality of speakers. In contrast, it can be said that the speech-to-unit encoder 110 according to an embodiment of the present disclosure preliminarily learns to express utterances by different utterance method, the utterances being close in terms of language, such as a whisper and a normal speech, in the same acoustic unit.

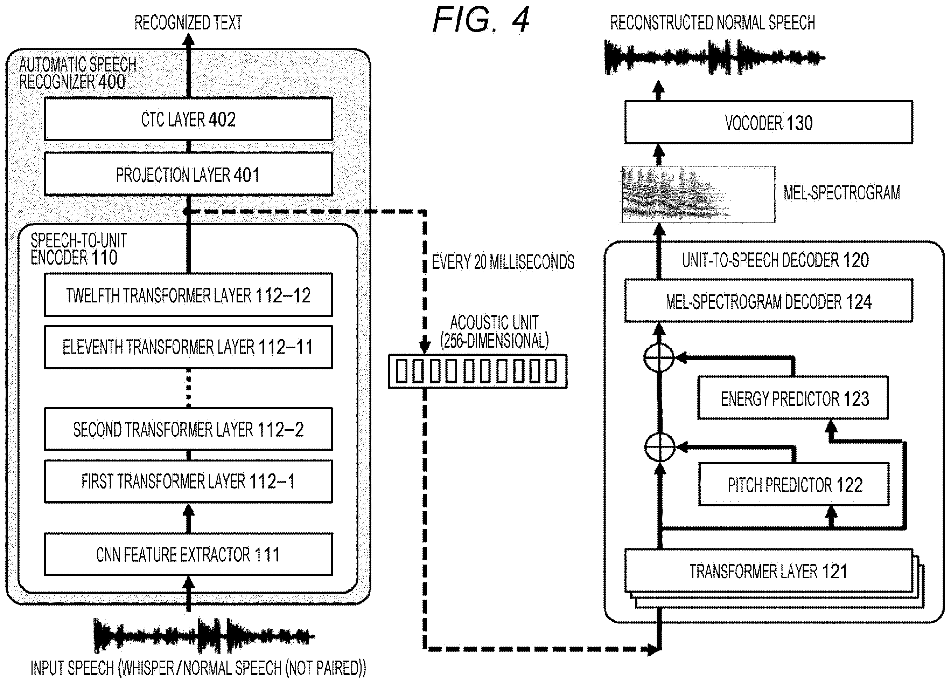

Note that the speech-to-unit encoder 110 can also be used as an automatic speech recognizer (ASR) that recognizes a whisper and a normal speech. Fig. 4 illustrates a configuration example of an automatic speech recognizer 400 to which the speech-to-unit encoder 110 is applied. The automatic speech recognizer 400 illustrated further includes a projection layer 401 and a connectionist temporal classification (CTC) layer 402 that are disposed as output of the speech-to-unit encoder 110. The speech-to-unit encoder 110 has an internal configuration as illustrated in Fig. 1. The speech-to-unit encoder 110 can be subjected to fine adjustment (fine tuning) to be capable of being used as the automatic speech recognizer 400 using a data set in the wTIMIT or the Librispeech.

### B-2. Unit-to-speech decoder

The unit-to-speech decoder 120 is configured to receive a generated acoustic unit from the speech-to-unit encoder 110 as an input and reconstruct a normal speech of a target speaker.

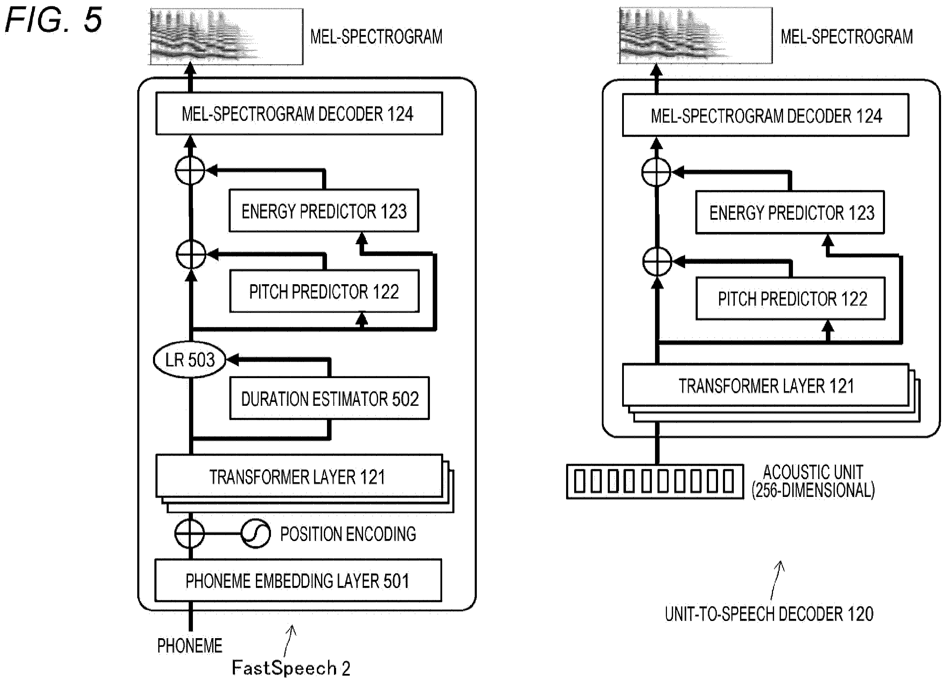

Fig. 1 illustrates the example in which the unit-to-speech decoder 120 is configured on the basis of a non-autoregressive text synthesis system FastSpeech2 (see Non Patent Document 6). Fig. 5 illustrates a comparison between configurations of an original FastSpeech2 and the unit-to-speech decoder 120 according to the present embodiment. Fig. 5 includes a left part illustrating a functional configuration of the original FastSpeech2, and a right part illustrating a functional configuration of the unit-to-speech decoder 120 according to the present embodiment.

The original FastSpeech2 needs to allow a phoneme embedding layer 501 for receiving and converting text into a vector sequence to learn. In contrast, the unit-to-speech decoder 120 does not require a part of the phoneme embedding layer because an acoustic unit from the speech decoder 120 is directly input and the acoustic unit includes no discrete token.

Additionally, the original FastSpeech2 includes a duration estimator (duration-prediction) 502 that estimates duration of each phoneme, and a length regulator (LR) 503 that stretches or shortens the number of internal vectors in accordance with the estimated duration. In contrast, the speech decoder 120 generates an acoustic unit having a time length that is always constant (20 milliseconds), so that the duration estimating unit 502 and the length regulator 503 can also be deleted in the unit-to-speech decoder 120.

Then, learning of the original FastSpeech2 requires duration corresponding to each text to be given as a true value, and the duration is required to be given by an external tool such as a Montreal Forced Aligner. Due to this condition, the learning of FastSpeech2 is dependent on a language. In contrast, the unit-to-speech decoder 120 does not need to estimate the duration (described above), and the speech conversion device 100 according to an embodiment of the present disclosure is independent of a specific language or an external tool. Although a result of a verification experiment of the speech conversion device 100 having learned with only speeches in English will be described later, as a matter of course, and embodiment of the present disclosure is also applicable to conversion of a whisper in Japanese.

In short, the unit-to-speech decoder 120 is based on the FastSpeech2 and has a simplified configuration as illustrated in Fig. 5. The unit-to-speech decoder 120 includes one or more transformer layers 121, a pitch predictor 122, an energy predictor 123, and a mel-spectrogram decoder 124. The pitch predictor 122 predicts and convolves a pitch (prosody) of a sound from output of the transformer layer 121, and the energy predictor 123 predicts and convolves strength of the sound from the output of the transformer layer 121. Then, the mel-spectrogram decoder 124 generates a mel-spectrogram of a speech corresponding to the acoustic unit input. That is, the output of the unit-to-speech decoder 120 is a mel-spectrogram as in the original FastSpeech2.

The mel-spectrogram output from the unit-to-speech decoder 120 can be converted into an actual speech waveform using the vocoder 130. Applicable examples of the vocoder 130 include a neural vocoder such as HiFi-GAN (see Non Patent Document 7). The HiFi-GAN is provided as a library computer program.

### B-3. Learning of unit-to-speech decoder

The unit-to-speech decoder 120 learns construction of a speech of a target speaker from only a speech waveform of the target speaker by using the speech-to-unit encoder 110 frozen. The speech waveform as learning data requires no corresponding text label.

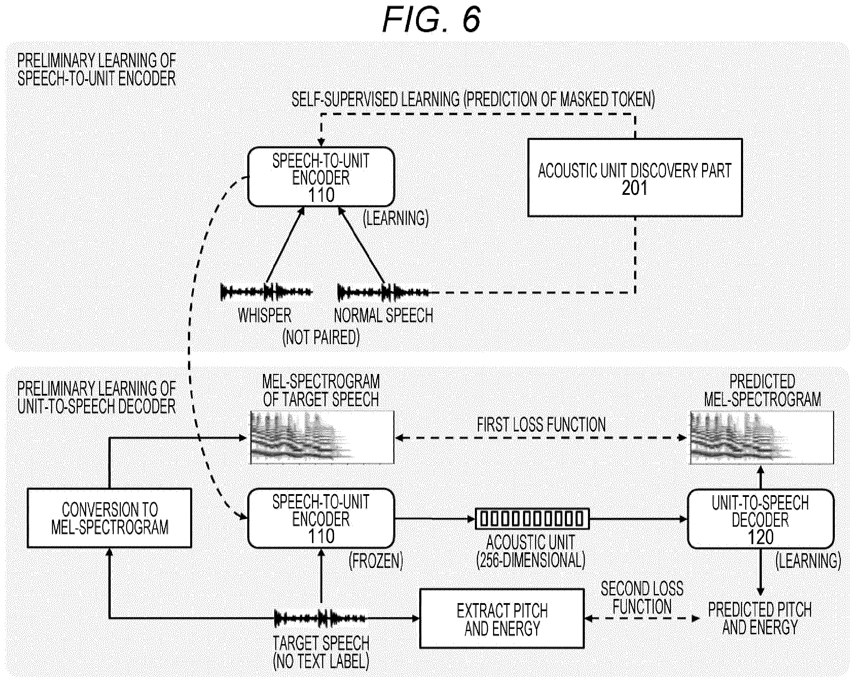

Fig. 6 illustrates learning of the speech-to-unit encoder 110 and the unit-to-speech decoder 120. Fig. 6 includes an upper part illustrating preliminary learning of the speech-to-unit encoder 110, and a lower part illustrating preliminary learning of the unit-to-speech decoder 120 using the speech-to-unit encoder 110 frozen.

The preliminary learning of the speech-to-unit encoder 110 is performed by self-supervised learning of a Masked Language Model type in which a part of an input speech feature is masked and the masked part is estimated from other related information, as already described in Section B-1 above. Upon receiving a whisper and a normal speech that are not paired as an input, the speech-to-unit encoder 110 masks a part of a speech feature vector of the input of the speech waveform and estimates the masked part using the related information. Then, an acoustic unit discovery part 202 directly calculates a discrete unit of the masked part from the input of the speech waveform. The preliminary learning of the speech-to-unit encoder 110 is then performed using a loss function (Cross-Entroly Loss) based on a difference between the discrete units of the part output from the speech-to-unit encoder 110 and the acoustic unit discovery part 202.

The preliminary learning of the unit-to-speech decoder 120 is first performed to generate an acoustic unit from a target speech using the speech-to-unit encoder 110 frozen. The target speech is, for example, a speech of the target speaker. Then, the unit-to-speech decoder 120 generates a mel-spectrogram according to the acoustic unit generated from the target speech.

Alternatively, the mel-spectrogram can also be generated from the target speech. Specifically, after a linear spectrogram of the target speech is generated by a short time Fourier transform, the linear spectrogram is further subjected to logarithmic scale conversion to generate the mel-spectrogram.

Then, the unit-to-speech decoder 120 learns using a loss function (first loss function) based on a difference between the mel-spectrogram generated from the acoustic unit by the unit-to-speech decoder 120 and the mel-spectrogram directly generated from the target speech.

Additionally, the unit-to-speech decoder 120 includes the pitch predictor 122 that predicts prosody of speech from an acoustic unit and the energy predictor 123 that predicts acoustic intensity from an acoustic unit as illustrated in Figs. 1 and 5. Thus, the pitch predictor 122 and the energy predictor 123 in the unit-to-speech decoder 120 learn using a loss function (second loss function) based on a difference between the prosody and acoustic intensity of the target speech predicted by the pitch predictor 122 and the energy predictor 123, respectively, using the acoustic unit generated from the target speech by the speech-to-unit encoder 110 frozen, and prosody and acoustic intensity directly extracted from the target speech.

A typical text to speech (TTS) system requires a target speech associated with a text label to perform learning. In contrast, the speech conversion device 100 according to an embodiment of the present disclosure is capable of learning only with the target speech without text. As can be seen from the lower part of Fig. 6, the target speech is first passed through the speech-to-unit encoder 110 to acquire an acoustic unit corresponding to a speech waveform, and the unit-to-speech decoder 120 learns using the acquired acoustic unit.

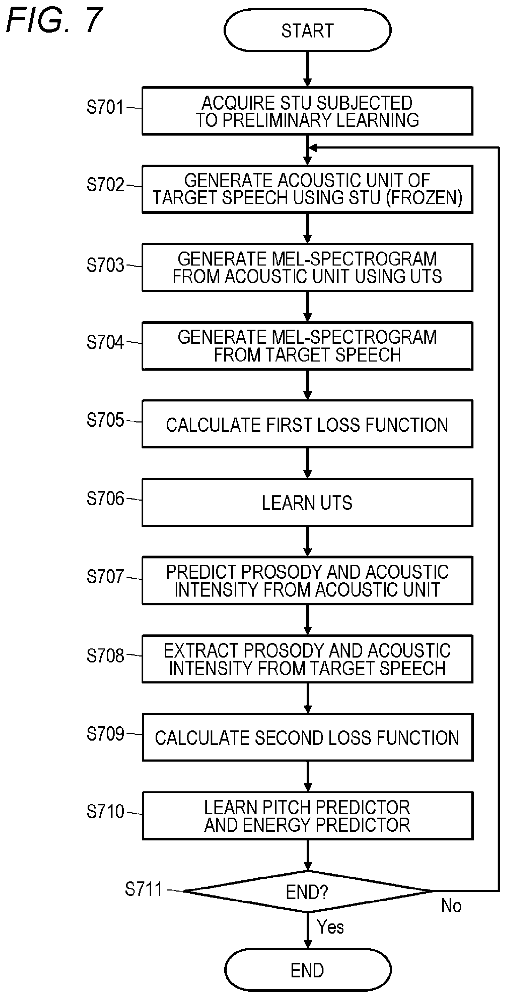

Fig. 7 illustrates a processing procedure for allowing the unit-to-speech decoder 120 to preliminarily learn in the form of a flowchart. This processing procedure is performed, for example, on a learning device. The learning device may be mounted on the same information processing device as that of the speech conversion device 100, or may be mounted on an information processing device different from that of the speech conversion device 100.

First, the speech-to-unit encoder 110 subjected to preliminary learning by the Masked Language Model type self-supervised learning is acquired (step S701). The unit-to-speech decoder 120 preliminarily learns by freezing and using the speech-to-unit encoder 110 acquired in step S701.

Next, an acoustic unit is generated from a target speech using the speech-to-unit encoder 110 frozen (step S702). The target speech is, for example, a speech of the target speaker.

Next, the unit-to-speech decoder 120 is used to generate a mel-spectrogram from the acoustic unit generated from the target speech in the preceding step S702 (step S703).

Additionally, a mel-spectrogram is directly generated from the same target speech (step S704). Specifically, after a linear spectrogram of the target speech is generated by a short time Fourier transform, the linear spectrogram is further subjected to logarithmic scale conversion to generate the mel-spectrogram.

Next, a first loss function based on a difference between the mel-spectrograms generated in respective steps S703 and S704 is calculated (step S705). Then, the unit-to-speech decoder 120 learns to minimize the first loss function (step S706).

Next, the pitch predictor 122 and the energy predictor 123 in the unit-to-speech decoder 120 respectively predict prosody and acoustic intensity of the target speech using the acoustic unit generated from the target speech in the preceding step S702 (step S707). Additionally, prosody and acoustic intensity are directly extracted from the same target speech (step S708).

Then, when the second loss function based on a difference between the prosody and acoustic intensity acquired in step S707 and those acquired in S708 is calculated (step S709), the pitch predictor 122 and the energy predictor 123 learn to minimize the second loss function (step S710).

Then, it is checked whether or not the preliminary learning reaches an end condition (step S711). The end condition may be whether or not learning has converged, the number of learnings, a learning time, or the like. In a case where the preliminary learning reaches the end condition (Yes in step S711), the present processing is ended. Additionally, in a case where the preliminary learning does not reach the end condition (No in step S711), the processing returns to step S702 described above to repeatedly perform the preliminary learning of the unit-to-speech decoder 120.

### C. Evaluation of conversion quality

The speech conversion device 100 according to an embodiment of the present disclosure is capable of converting a whisper independent of a speaker and a language into a normal voice. This section C describes a result of evaluating quality of conversion of a speech performed by the speech conversion device 100 from three criteria in consideration of conversion from a whisper to a normal speech and speech reconstruction of a person with language impairment and a person with hearing impairment. However, it is assumed that the speech conversion device 100 to be evaluated is constructed using an information processing device 2000 described later in Section D.

### C-1. Conversion quality from whisper to normal speech

Experiment participants collected by using crowdsourcing listened to each of normal speeches, whispers, and speeches converted by the speech conversion device 100, and ranked the converted speeches using a mean-opinion score (MOS) on five scales and other questionnaires, thereby evaluating conversion quality of the speech conversion device 100. To avoid a difference in impression due to content of a sentence, the same sentence was used for all speeches. Note that the experiment participants include fifty people who are eighteen years old or older and proficient in English at equal ratios of men and women, and can be recruited using a crowdsourcing system such as Prolfic, for example.

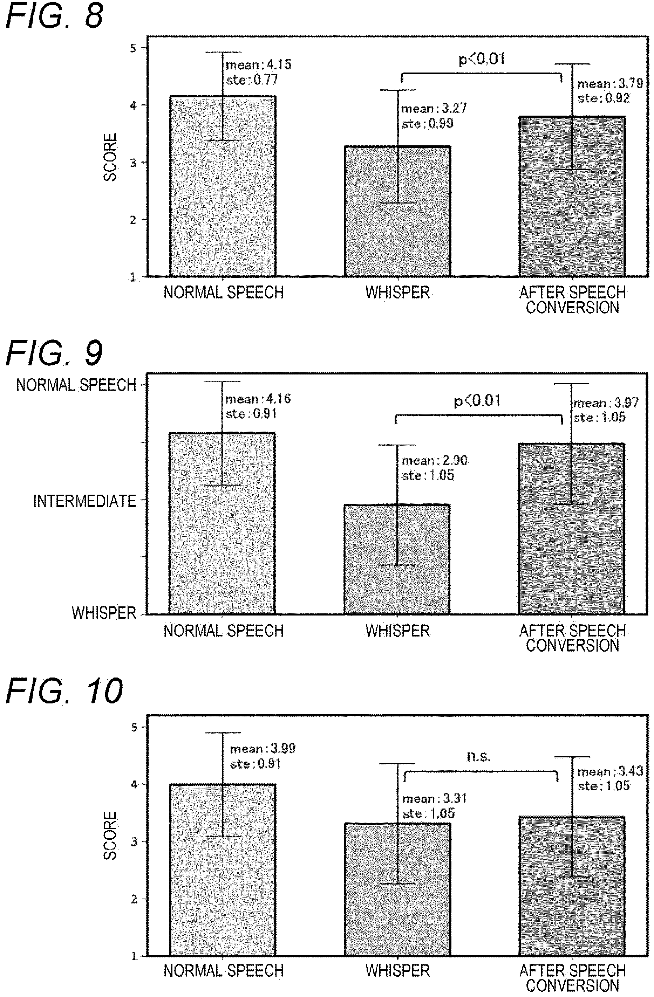

Figs. 8 to 10 illustrate evaluation results of the conversion quality from a whisper to a normal speech using the speech conversion device 100. Each drawing shows an average (mean) along with a standard error (ste). Fig. 8 illustrates evaluation results of the MOS. It can be seen that the MOS of an original whisper is improved by the speech conversion device 100. Comparison between the MOS of a whisper and the MOS of a speech converted by the speech conversion device 100 results in a significance probability p of less than 0.01. Fig. 9 shows answers of the experiment participants to the question "Is this voice a faint speech or normal?", and the speech converted by the speech conversion device 100 shows a clear improvement (p < 0.01). Fig. 10 shows answers of the experiment participants to the question "Does voice retain consistent articulation, standard intonation, cadence?". Here, the whisper and the speech converted by the speech conversion device 100 show almost the same score, and there is no statistically significant difference (none significant: n.s.). Thus, the speech converted by the speech conversion device 100 can be interpreted as retaining naturalness of prosody of the current speech.

Summarizing the evaluation results shown in Figs. 8 to 10 enables acquiring conclusions (1) to (3) below.
(1) The speech conversion device 100 is capable of converting a whisper into a normal speech.
(2) The speech data converted from whispers by the speech conversion device 100 has a higher MOS than original whispers.
(3) The speech conversion device 100 is capable of converting a speech while holding a natural prosody of an original whisper.

Note that the speech conversion device 100 can be used as a speech recognizer, and thus evaluation of speech recognition accuracy will also be described.

Considerable examples of a method for using the speech conversion device 100 as a speech recognizer include two methods of a method for performing speech recognition using the speech conversion device 100 alone and a method for further recognizing a speech converted by the speech conversion device 100 using another speech recognizer.

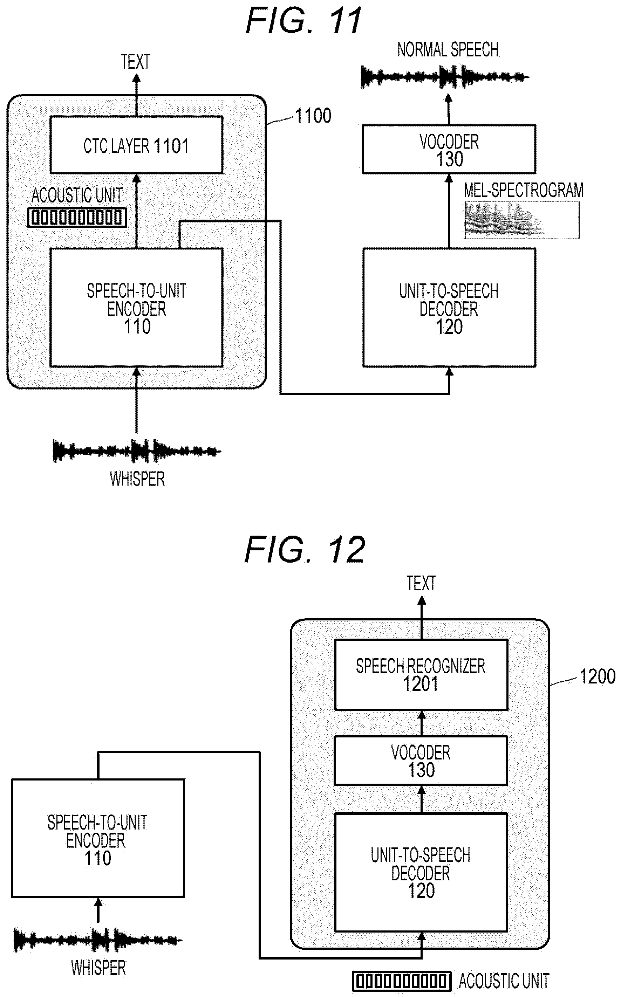

Fig. 11 schematically illustrates a functional configuration 1100 for implementing the former method. As described in Section B-1 above, a CTC layer 1101 is disposed at a subsequent stage of the speech conversion device 100 (the speech-to-unit encoder 110 subjected to preliminary learning with a whisper and a normal speech) to enable text to be estimated from a whisper after fine adjustment using a whisper corpus.

Then, Fig. 12 schematically illustrates a functional configuration 1200 for implementing the latter method. Another speech recognizer 1201 is further disposed at a subsequent stage of the speech conversion device 100 including the speech-to-unit encoder 110 and the unit-to-speech decoder 120 that are each subjected to preliminary learning. The speech recognizer 1201 texts from a speech converted from a whisper by the speech conversion device 100. The speech recognizer 1201 may be an existing ASR such as Google Cloud Speech-to-Text, for example.

First, recognition accuracy of a normal speech, a whisper, and a speech converted by the speech conversion device 100 was measured using an existing speech recognition device as an evaluation means. When recognition accuracy of a speech converted by the speech conversion device 100 is evaluated with reference to recognition accuracy of a normal speech and a whisper using Google Cloud Speech-to-Text as an existing voice recognition device and using a corpus in which normal voice and whispers are recorded with labels, it has been found out that the recognition accuracy (word error rate: WER) is improved by the conversion using the speech conversion device 100 as compared with a case of directly recognizing a whisper.

Then, it has been found out that preliminary learning using data sets of the wTIMIT and the Librispeech in the configuration in which the CTC layer is added at a subsequent stage of the speech-to-unit encoder 110 (see Fig. 11) improves a score of the WER as compared with speech recognition using Google Cloud Speech-to-Text. From this, it is presumed that effect of the preliminary learning in which whispers and normal speeches are mixed may contribute to the speech recognition accuracy.

It should be noted that the speech conversion device 100 performs the preliminary learning by using mixed data on a whisper and a normal speech without using a labeled corpus. That is, the speech conversion device 100 is improved in voice recognition accuracy without requiring teacher data (text label) for a whisper.

### C-2. Evaluation of utterance correction of person with speech impairment and person with hearing impairment

The speech conversion technology according to an embodiment of the present disclosure has important uses one of which is reconstruction of an atypical speech of a person with speech impairment such as a person with language impairment and a person with hearing impairment. This section C-2 describes a result of evaluation of performance of speech reconstruction of the speech conversion device 100.

The speech impairment refers to involuntary blurring of voice, difficulty in breathing, tension, and a decrease in volume and tone of sound, due to various factors such as spasm and vocal tract polyps. Additionally, even when vocal cords are excised due to pharyngeal cancer or the like, a voice is extremely less likely to be uttered. In contrast, hearing impairment causes speech impairment even with no abnormality in a vocal organ itself due to difficulty in controlling an utterance. Although an electrolarynx (EL) is sometimes used to mechanically vibrate a throat of a person with a vocal cord damaged as utterance of the person, the EL causes a problem that noise is generated, a sound to be uttered is artificial, pitch conversion is deterministic, and a deviation from a normal utterance is large. Communication failure due to speech impairment is serious. Thus, resolution by speech conversion technology has a great social value.

The present specification describes an evaluation result of speeches obtained by converting speeches of two types of persons with speech impairment, such as a person with vocal fold polyps (VFP) and a person with spasmodic dysphonia (SD), using the speech conversion device 100. The VFP occurs most frequently among benign lesions of the larynx and is a disease affecting voice quality. Then, the SD is also called laryngeal dystonia, and is a representative neurological disease that affects a voice and a conversation, and inhibits utterance due to a spasm of a muscle for making a voice.

Utterance correction performance of the speech conversion device 100 was evaluated using speeches of sentences recorded in the Saarbruecken Voice Database (SVD) that is often used as a corpus recording speeches of people with language impairment. This corpus records recordings of vowel sound utterances by multiple speakers with various speech impairment and "Guten Morgen, wie geht es Ihnen?" that is a reference sentence in German. Utterances of this sentence with multiple speakers including the VFP and the SD were used for the evaluation.

Then, example sentences in German were included, so that fifty experiment participants who were eighteen years old or older and proficient in German in addition to English were recruited through a crowdsourcing system such as the Prolfic.

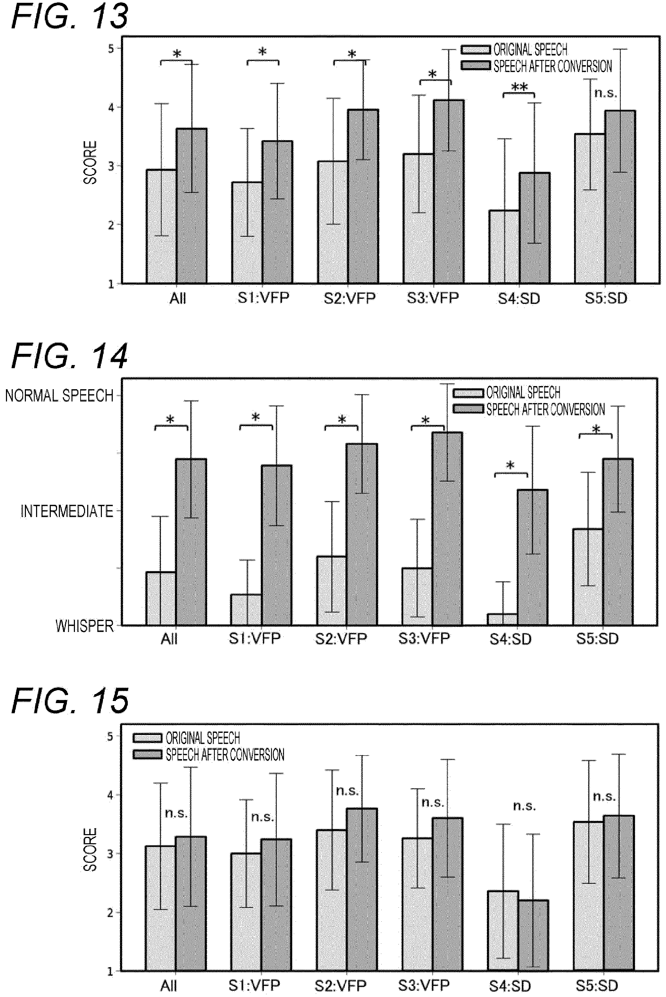

Figs. 13 to 15 show evaluation results of voice quality improvement of a person with speech impairment using the speech conversion device 100. Then, each drawing shows S1 to S5 each representing a speaker (person with speech impairment), and including S1 to S3 that are each a VFP, and S4 to S5 that are each a SD, and All representing all speakers. Additionally, each drawing shows * indicating a significant probability p of less than 0.01, and ** indicating p of less than 0.05. Fig. 13 shows MOS evaluation results for original utterances of the respective speakers S1 to S5 and speeches converted by speech conversion device 100. The speeches converted by speech conversion device 100 each show a higher MOS value for utterances of the persons with speech impairment each having the SD or the VFP (p < 0.01). Fig. 14 shows answers of the experiment participants in a case of asking the question, "Is this voice a faint speech or normal?", for an original utterance of each of the speakers S to S56 and speeches converted by the speech conversion device 100, and shows that the speeches converted by the speech conversion device 100 are clearly improved as compared with the original speeches of the persons with speech impairment each having the VFP or the SD (p < 0.01). Fig. 15 shows answers of experiment participants when the question, "Is the voice using consistent articulation, standard intonation, and prosody?", is asked for the original utterance of each of speakers S1 to S5 and the speeches converted by speech conversion device 100. Although the original utterances of the persons with speech impairment and the speeches converted by the speech conversion device 100 here have almost the same score, and thus there is no statistically significant difference (n.s.), the speeches converted by the speech conversion device 100 each have a slightly better score.

Summarizing the evaluation results shown in Figs. 13 to 15 enables acquiring conclusions (1) to (3) below.
(1) Converting speeches of the VFP and the SD using the speech conversion device 100 improves the MOS. The speech conversion device 100 is capable of improving speech quality of a person who does not know individual utterance contents in terms of understanding from the person.
(2) Converting speeches of the VFP and the SD using the speech conversion device 100 enables the speeches to be closer to normal speeches than faint speeches.
(3) The speech conversion device 100 is capable of converting original speeches of VFP and the SD while holding natural prosody of the original speeches.

Note that this test was performed on German sentences. The preliminary learning of the speech conversion device 100 was performed only by English speeches, and learning of German speeches was not performed. Thus, it can be seen that the speech conversion device 100 is capable of maintaining prosody of original speeches and improve the MOS thereof, and has language independency.

### C-3. Evaluation of speech reconstruction of person with hearing impairment

Subsequently, a result of evaluating effect of voice reconstruction using the speech conversion device 100 on a person with hearing impairment will be described. Persons with hearing impairment cannot hear their voices well as compared with healthy persons, and thus are less likely to speak in a manner to be easily understood by general speakers. However, the persons with hearing impairment have normal vocal organs, and thus have features of speeches that are different from those of persons with speech impairment.

Speech reconstruction of the speech conversion device 100 was evaluated using a corpus of deaf speech for acoustic and speech production research for research on sound and speech generation (see Non Patent Document 8). Then, fifty experiment participants who were eighteen years old or older and proficient in English and had an equal gender ratio were recruited using a crowdsourcing system such as the Prolfic.

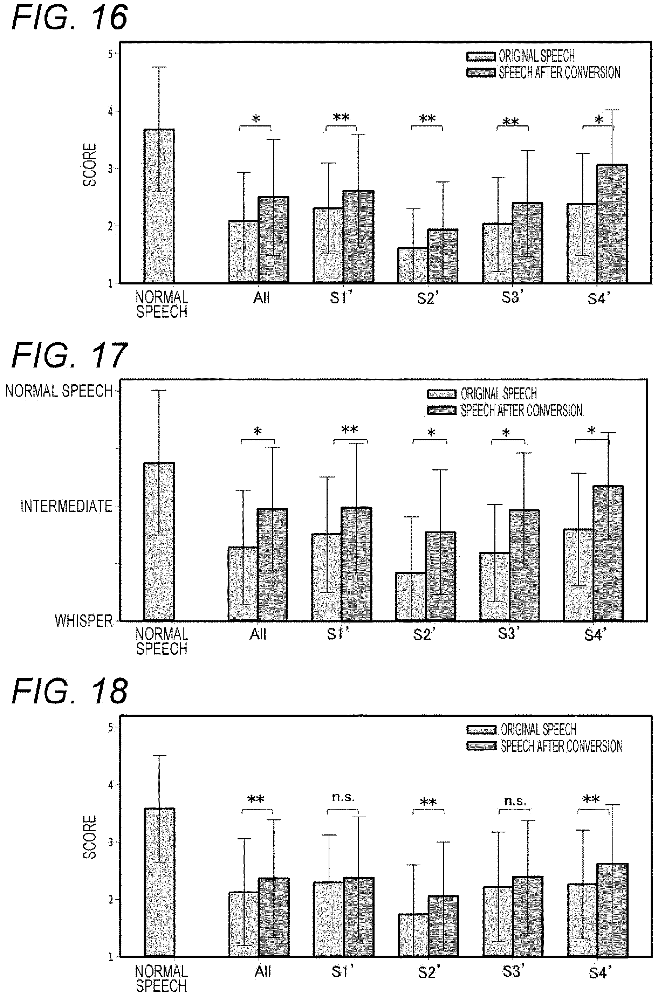

Figs. 16 to 18 illustrate evaluation results of speech reconstruction of persons with hearing impairment using the speech conversion device 100. Then, each drawing shows S1' to S4' each representing a speaker (person with hearing impairment), and All representing all speakers. For comparison, evaluation results of normal speeches are also included. Additionally, each drawing shows * indicating a significant probability p of less than 0.01, and ** indicating p of less than 0.05. Fig. 16 shows MOS evaluation results for original utterances of the respective speakers S1' to S4' and speeches converted by the speech conversion device 100. The speeches converted by the speech conversion device 100 each show a higher MOS value for utterances of any speakers S1' to S4' (p < 0.01 or p < 0.05). Fig. 17 shows answers of the experiment participants in a case of asking a question, "Is this a faint speech or normal?", for an original utterance of each of the speaker S1' to S4' and a speech converted by the speech conversion device 100. The speech converted by the speech conversion device 100 is clearly improved (p < 0.01 or p < 0.05) as compared with the original utterance of each of the speakers S1' to S4'. Fig. 18 shows answers of the experiment participants when a question, "Consistent articulation, standard intonation, and prosody are used?", was asked for an original utterance of each of the speakers S1' to S4' and a speech converted by the speech conversion device 100. Fig. 18 here shows that the speech converted by the speech conversion device 100 has a significantly lower prosody evaluation than an original utterance of a person with hearing impairment. Thus, Fig. 18 shows that the persons with hearing impairment may be less likely to control prosody during speech.

### D. Configuration of information processing device

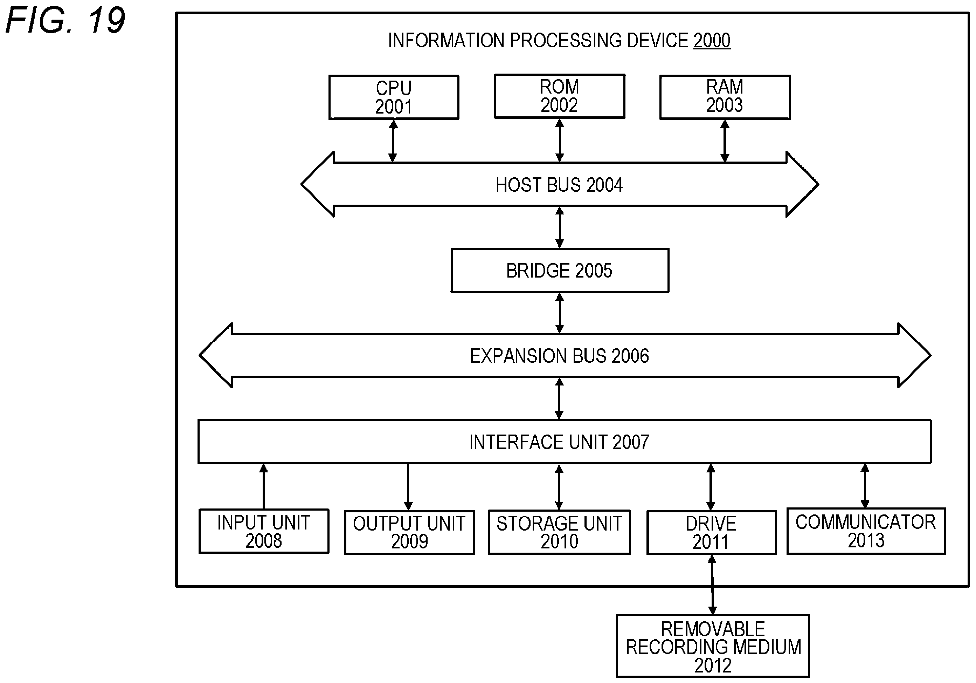

This section D describes an information processing device used to implement the voice conversion technology according to an embodiment of the present disclosure. Fig. 19 illustrates a configuration example of the information processing device 2000. The information processing device 2000 is capable of operating as the speech conversion device 100, for example. Additionally, the information processing device 2000 is also capable of operating as a learning device that learns at least one of the speech-to-unit encoder 110 or the unit-to-speech decoder 120 mounted on the speech conversion device 100.

The information processing device 2000 illustrated in Fig. 19 includes a central processing unit (CPU) 2001, a read only memory (ROM) 2002, a random access memory (RAM) 2003, a host bus 2004, a bridge 2005, an expansion bus 2006, an interface unit 2007, an input unit 2008, an output unit 2009, a storage unit 2010, a drive 2011, and a communicator 2013.

The CPU 2001 functions as an arithmetic processor and a control device, and controls overall operation of the information processing device 2000 according to various programs. In consideration of a calculation load in a case where the information processing device 2000 operates as a learning device of the speech-to-unit encoder 110 and the unit-to-speech decoder 120 or operates as the speech conversion device 100, it is desirable that the CPU 2001 is a multi-core CPU (e.g., Apple M1 Max or the like), and the information processing device 2000 further includes a multi-core processor (e.g., NVIDIA R6000 or the like) such as a graphics processing unit (GPU) or a general-purpose computing on graphics processing units (GPGPU) in addition to the CPU 2001. Then, these are collectively referred to below simply as the CPU 2001, for convenience.

The ROM 2002 stores programs (such as a basic input-output system) and calculation parameters to be used by the CPU 2001 in a nonvolatile manner. The RAM 2003 is used to load a program to be used in execution of the CPU 2001 and temporarily store parameters such as work data that appropriately changes during execution of a program. Examples of the program loaded into the RAM 2003 and executed by the CPU 2001 includes various application programs, an operating system (OS), and the like.

The CPU 2001, the ROM 2002, and the RAM 2003 are interconnected using a host bus 2004 including a CPU bus and the like. Then, the CPU 2001 operates in conjunction with the ROM 2002 and the RAM 2003 to execute various application programs under execution environment provided by the OS, thereby enabling various functions and services to be implemented. In a case where the information processing device 100 is a personal computer, the OS is, for example, Windows of Microsoft Corporation or Unix. In a case where the information processing device 2000 is an information terminal such as a smartphone or a tablet, the OS is, for example, iOS of Apple Inc. or Android of Google Inc. Additionally, the application programs include an application for operating as a speech-to-unit encoder and a unit-to-speech decoder, an application for performing preliminary learning of the speech-to-unit encoder and the unit-to-speech decoder, and other various library computer programs.

The host bus 2004 is connected to the expansion bus 2006 via the bridge 2005. The expansion bus 2006 is, for example, a peripheral component interconnect (PCI) bus or PCI Express, and the bridge 2005 is based on the PCI standard. Then, the information processing device 2000 is not necessarily required to have a configuration in which circuit components are separated by the host bus 2004, the bridge 2005, and the expansion bus 2006, and thus may be configured such that almost all circuit components are implemented by being interconnected using a single bus (not illustrated).

The interface unit 2007 connects peripheral devices such as the input unit 2008, the output unit 2009, the storage unit 2010, the drive 2011, and the communicator 2013 according to the standard of the expansion bus 2006. However, all of the peripheral devices illustrated in Fig. 19 are not necessarily essential, and the information processing device 2000 may further include another peripheral device (not illustrated). Additionally, the peripheral devices may be built in a body of the information processing device 2000, or some peripheral devices may be externally connected to the body of the information processing device 2000.

The input unit 2008 includes an input control circuit that generates an input signal on the basis of an input from a user and outputs the input signal to the CPU 2001, and the like. In a case where the information processing device 2000 is a personal computer, the input unit 2008 may include a keyboard, a mouse, and a touch panel, and may further include a camera and a microphone. Then, in a case where the information processing device 2000 is an information terminal such as a smartphone or a tablet, the input unit 2008 is, for example, a touch panel, a camera, or a microphone, and may further include another mechanical operator such as a button.

In a case where the information processing device 2000 operates as the speech conversion device 100, the input unit 2008 is used to input learning data such as a whisper, a normal speech, and a target speech during learning. Additionally, during inference, a target whisper (or speech of a person with speech impairment or a person with hearing impairment) is input via the microphone included in the input unit 2008.

Available examples of a speech input configuration for the speech conversion device 100 include a headset, a micro electro mechanical systems (MEMS) microphone, a directional microphone in which a plurality of MEMS microphones is arranged, and a mobile phone microphone. The microphone may be provided with a pop guard that prevents pops noise of a whisper and an acoustic insulator that reduces environmental noise, which are attached to the microphone.

The output unit 2009 includes a sound output device such as a speaker and a headphone. The output unit 2009 also includes, for example, a display device such as a liquid crystal display (LCD) device, an organic electroluminescence (EL) display device, and a light emitting diode (LED).

In a case where the information processing device 2000 operates as the speech conversion device 100, a speech obtained by speech conversion from a whisper received from the microphone serving as the input unit 2008 is output through a speaker or a headphone included in the output unit 2009. Then, in a case where the speech conversion device 100 is used to recognize a speech, a text recognized from a whisper received from the microphone serving as the input unit 2008 is displayed on a screen of a display device included in the output unit 2009, and is further used for processing such as document input and document editing.

The storage unit 2010 stores files such as programs (application, OS, etc.) to be executed by the CPU 2001 and various data. The data stored in the storage unit 2010 may include a corpus of normal speeches and whispers (described above) for training a neural network. Although the storage unit 2010 includes, for example, a mass storage device such as a solid state drive (SSD) or a hard disk drive (HDD), it may include an external storage device.

In a case where the information processing device 2000 operates as the speech conversion device 100, learning data (speech waveform data on each of a whisper, a normal speech, a target speech) may be accumulated in the storage unit 2010, and read and used during learning. Then, in a case where the speech conversion device 100 is used to recognize a speech, a document file input and edited using text recognized from a whisper may be stored in the storage unit 2010.

A removable storage medium 2012 is a cartridge-type storage medium such as a micro-SD card. The drive 2011 performs read and write operations on a removable storage medium 113 loaded therein. The drive 2011 outputs data read from the removable recording medium 2012 to the RAM 2003 and the storage unit 2010, and writes data on the RAM 2003 and the storage unit 2010 to the removable recording medium 2012.

The communicator 2013 is a device that performs wireless communication such as Wi-Fi (registered trademark), Bluetooth (registered trademark), or a cellular communication network such as 4G or 5G. The communicator 2013 also include a terminal such as a universal serial bus (USB) or a high-definition multimedia interface (HDMI being a registered trademark), and may further include a function of performing HDMI (registered trademark) communication with a USB device such as a scanner or a printer, a display, or the like.

In a case where the information processing device 2000 operates as the speech conversion device 100, a large amount of learning data (the Librispeech, the wTIMIT, or the like described above) may be acquired from a wide area network (the Internet, or the like) through the communicator 2013 during learning.

Additionally, in a case where the information processing device is used as a user interface (UI) device that performs input of a whisper to be converted and output of a normal speech after speech conversion, and conversion from the whisper to the normal speech is performed using a voice conversion neural network operating on an external device such as a server, the information processing device 2000 may transmit input data (speech waveform data on whispers) to the server through the communicator 2013 and receive output data (speech waveform data on normal speeches after conversion) from the server.

Although a personal computer (PC) is assumed as the information processing device 2000, the number of PCs is not limited to one, and a speech input system 100 illustrated in Fig. 1 may be fabricated with two or more PCs that are distributed, or the PC may be configured to execute processing of various applications introduced in Section F above.

Two types of UI are constructed to operate the information processing device 2000 as the speech conversion device 100. One of the two types is a push-to-talk method using button operation. While a button is pressed, a speech uttered in a whisper or a normal speech is input using a microphone. Then, when the button is released, a speech waveform recorded during that time is subjected to speech conversion processing, or transmitted to a voice conversion neural network, and a reproduced speech as a result of the speech conversion is output as audio from a speaker or a headphone. Operating the button described herein may be substituted by a pressing operation of a specific key defined on a keyboard or a clicking operation of a mouse, or a mechanical operator may be provided as the input unit 2008. The other of the two types is configured to detect a silent period of the input speech and automatically apply the speech conversion processing to a speech segment, or transmit the input speech to a speech conversion neural network.

### E. Application example

This section E introduces some application examples related to the speech conversion technology according to an embodiment of the present disclosure.

### E-1. Application to remote conference system

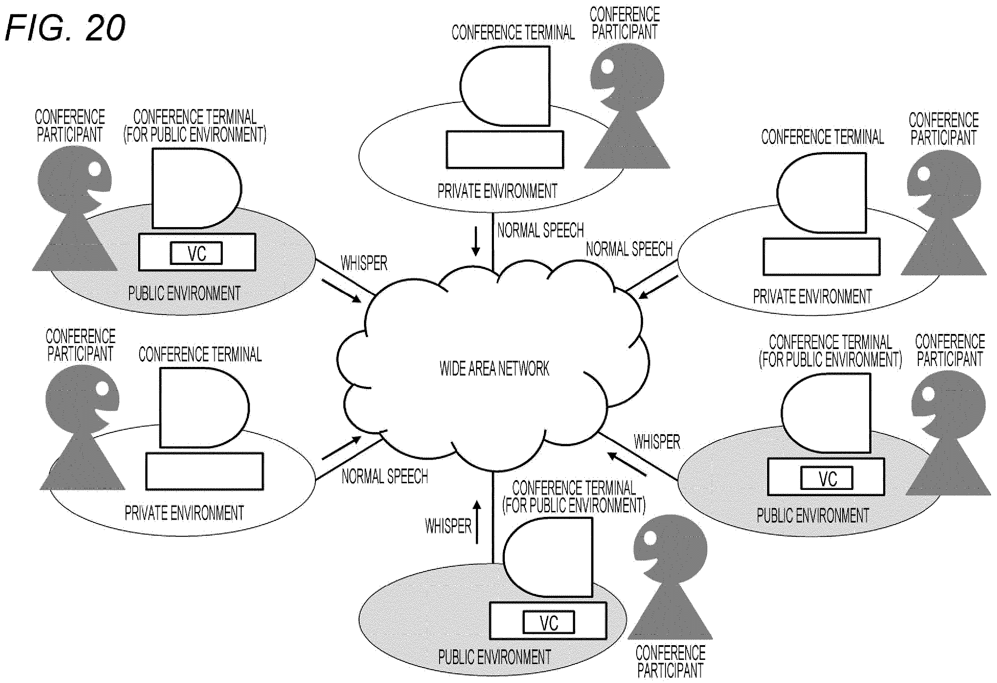

Fig. 20 illustrates a configuration example of a remote conference system to which an embodiment of the present disclosure is applied. The illustrated remote conference system includes conference terminals that are disposed in respective multiple sites physically separated and that are connected to each other via a wide area network such as the Internet. Then, each conference participant can participate in a remote conference through corresponding one of the conference terminals in a site where the conference participant is located.

Although the sites are each located in a private environment such as a workplace office or a home, for example, in many cases, some of the sites are located in a public environment. Fig. 20 illustrates the private environment represented by a white ellipse, and the public environment represented by a gray ellipse. This is because making a speech in the public environment causes trouble to others, and confidential information may be leaked. Even a remote conference held in the public environment causes a problem in that speaking in the remote conference is difficult due to a similar reason.

Thus, the conference terminal disposed in the public environment is equipped with a voice converter (VC) that converts a whisper into a normal speech by applying an embodiment of the present disclosure. This configuration enables a conference participant participating from a public environment to prevent trouble to its surroundings and leakage of confidential information by speaking in a whisper. Then, a whisper uttered by the conference participant is converted into a normal speech by the voice converter in the conference terminal and then transmitted. Thus, the conference terminal in another site reproduces a speech in a normal speech, the speech having the same content as that made in the whisper, so that the other conference participants can hear the speech of the conference participants in the public environment without any trouble.

Note that a unit-to-speech decoder in the speech converter mounted on the conference terminal in the public environment may preliminarily learn a speech of the conference participant itself as a target speech, the conference participant using the terminal. In this way, the speech made by the conference participant in a whisper can be heard as a normal speech of the conference participant itself in another conference terminal. As a matter of course, a normal speech of another person may be learned as the target speech, and a speech of the conference participant itself using a voice of the other person may be heard by other conference participants.

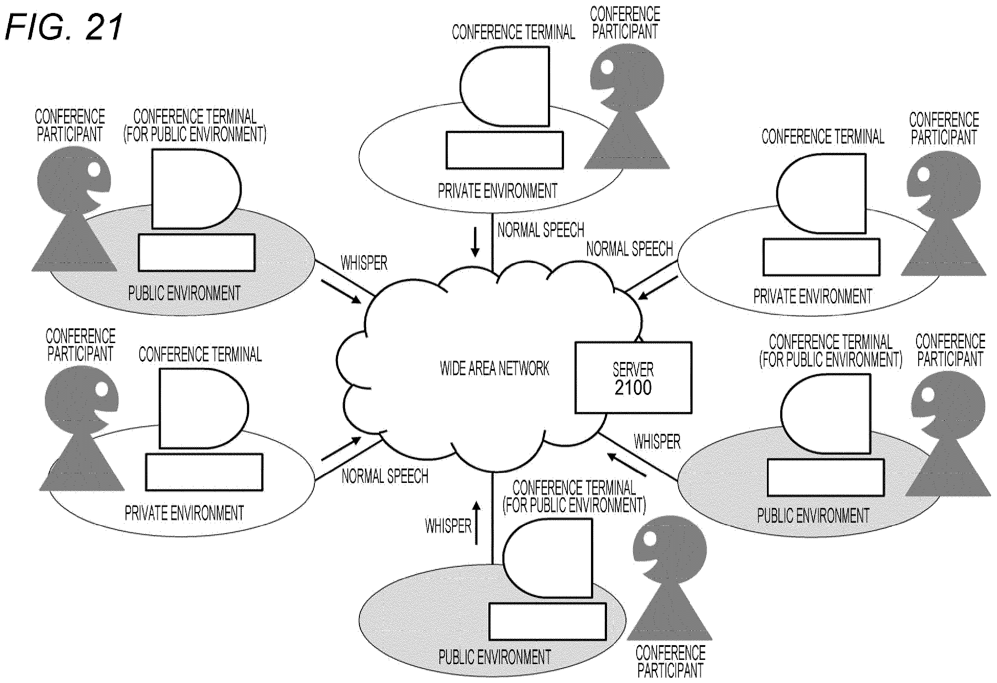

Fig. 21 illustrates a modification of the remote conference system to which an embodiment of the present disclosure is applied. As with the remote conference system illustrated in Fig. 20, the modification includes conference terminals that are disposed in respective multiple sites physically separated and that are connected to each other via a wide area network such as the Internet, and some of the sites are located in in a public environment.

However, unlike the system configuration example illustrated in Fig. 20, the modification illustrated in Fig. 21 includes conference terminals disposed in the private environment and the public environment, all the conference terminals being equipped with no speech converter. Alternatively, the wide area network is provided with a server 2100 that operates the speech conversion neural network. Although the system configuration illustrated in Fig. 20 includes a speech conversion model mounted for each conference terminal to which a whisper is input, it can be said that the system configuration illustrated in Fig. 21 includes a speech conversion model shared by multiple conference terminals.

Speech data on speeches uttered by the conference participant in any site is directly transmitted from the corresponding conference terminal to the wide area network. As a matter of course, when the conference participant in the public environment speaks in a whisper, waveform data on the whisper is directly transmitted from its conference terminal. Then, the server 2100 separates the voice data transmitted from each conference terminal into a whisper and a normal speech, and converts the whisper into an original normal speech of the conference participant as a target voice, and then the converted speech is transmitted to each conference terminal. The server also directly transmits voice data classified as the normal speech to each conference terminal without performing speech conversion. As a matter of course, the server may convert a normal speech transmitted from a conference terminal even in a private environment into a normal speech of another person (other than a speaker) and transmit the speech to each conference terminal.

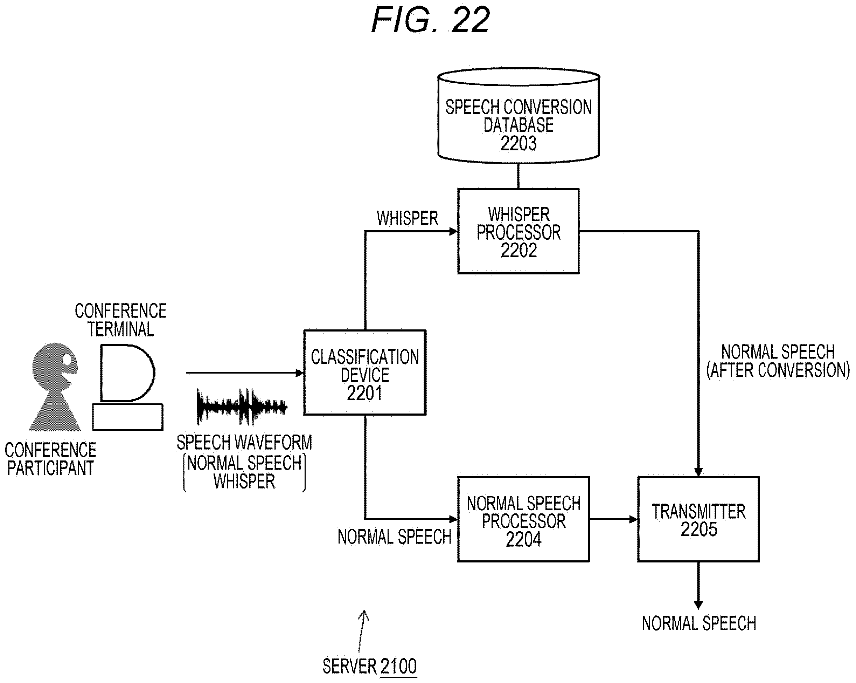

Fig. 22 schematically illustrates a functional configuration of the server 2100 installed on the wide area network in the remote conference system illustrated in Fig. 21. The illustrated server 2100 includes a classification device 2201, a whisper processor 2202, a speech conversion database 2203, a normal speech processor 2204, and a transmitter 2205.

The conference terminal in each site transmits speech waveform data acquired on the basis of the push-to-talk method or the detection of the silent period (described above) to the server 2100. The server 2100 receives the speech waveform data from each conference terminal, the speech waveform data including a mixture of normal voices and whispers. The classification device 2201 classifies input speeches into a normal speech and a whisper on the basis of the amount of speech features, and distributes the input speeches to corresponding one of the whisper processor 2202 and the normal speech processor 2204 in the subsequent stage.

The whisper processor 2202 basically has the same functional configuration as the speech conversion device 100, and includes the speech-to-unit encoder 110 and the unit-to-speech decoder 120 that are subjected to preliminary learning and are not illustrated in Fig. 22. The whisper processor 2202 converts speech waveform data on the whispers sorted by the classification device 2201 into a normal speech of a target speech. Processing of converting a whisper into the normal speech of the target speech is as described in Section B above, and thus is not described in detail here.

Here, the target speech mentioned is of a conference participant who is a speaker of an original whisper, and is different for each conference terminal that is a transmission source of a speech. Thus, a speech model obtained by preliminary learning for each target speech of each conference participant may be accumulated in the speech conversion database 2203 in association with the corresponding one of the conference participants or conference terminals. Each time a whisper is received from the classification device 2201, the whisper processor 2202 acquires a corresponding speech model from the speech conversion database 2203 to set the speech model in the unit-to-speech decoder 120, and converts the whisper into a normal speech of an appropriate target speech.

The normal speech processor 2204 processes the speech waveform data on the normal speeches sorted by the classification device 2201. Normal speeches are not basically required to be converted into other speeches, so that the normal speech processor 2204 may pass sound data input from the classification device 2201 or may perform processing such as noise removal. Additionally, the normal speech processor 2204 may convert an input speech into a normal speech of another target speech.

Then, the transmitter 2205 transmits the speech data processed by each of the whisper processor 2202 and the normal speech processor 2204 to each conference terminal.

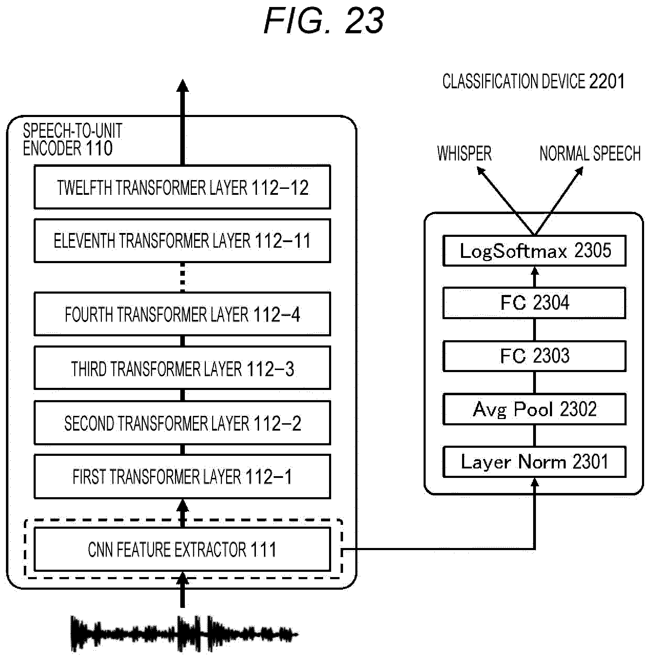

Fig. 23 illustrates a configuration example of the classification device 2201. The classification device 2201 has a function of classifying an input speech into a normal speech and a whisper on the basis of the amount of speech features. The classification device 2201 partially shares the neural network (CNN feature extractor 111) with the speech-to-unit encoder 110 in the whisper processor 2202, so that the server 2100 is reduced in network size as a whole. The classification device 2201 is capable of acquiring a classification of a normal speech and a whisper from a speech waveform signal by sequentially applying a normalization layer (Layer Norm) 2301, an average pooling layer (Avg Pool) 2302, following two fully connected (FC) layers 2303 and 2304, and a LogSoftmax layer 2305 as an output layer of multi-class classification to a feature vector extracted from the speech waveform signal.

### E-2. Application to support device

Persons with speech impairment and persons with hearing impairment can only generate faint speeches or speeches with irregular prosody. The speech conversion technology according to an embodiment of the present disclosure can convert a speech with irregular prosody into a normal speech (see Sections C-2 and C-3 described above), and thus can be used in an utterance support device for supporting utterance of a support target person such as a person with speech impairment or a person with hearing impairment.

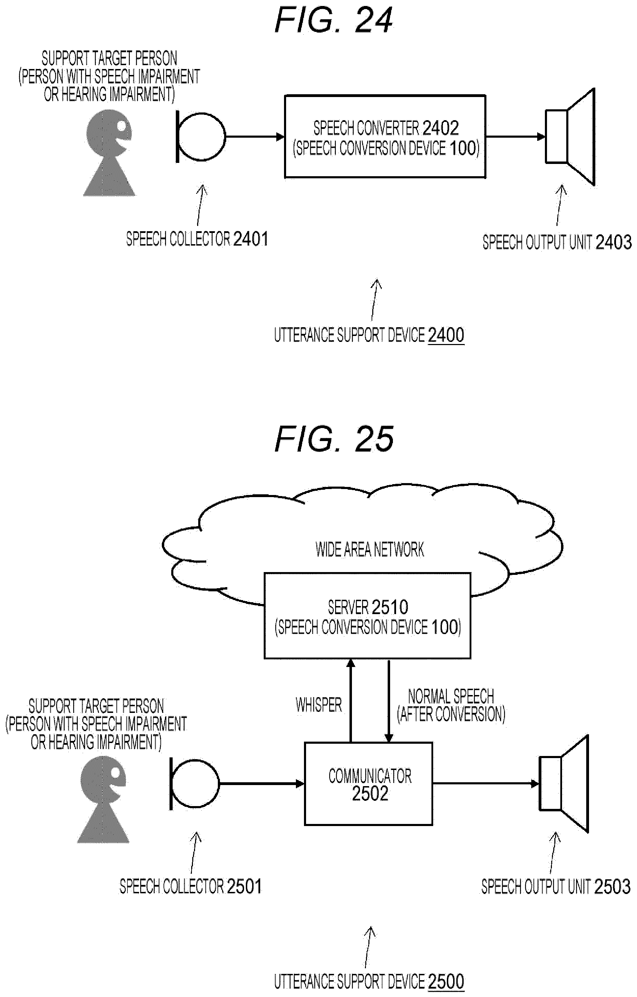

Fig. 24 illustrates a functional configuration of an utterance support device 2400 for a person with speech impairment or a person with hearing impairment to which an embodiment of the present disclosure is applied. The utterance support device 2400 illustrated includes a speech collector 2401, a speech converter 2402, and a speech output unit 2403. Although an external configuration of the utterance support device 2400 is not illustrated, at least the speech collector 2401 and the speech output unit 2403 are preferably disposed near the mouth of a support target person, and are preferably configured as a wearable device such as a headset worn on the head of the support target person, for example.

The speech collector 2401 includes a microphone that collects a speech of a speaker, and specifically includes a headset, a MEMS microphone, a directional microphone in which a plurality of MEMS microphones is arranged, or the like. The microphone may be provided with a pop guard that prevents pops noise of a whisper and an acoustic insulator that reduces environmental noise, which are attached to the microphone. The speech collector 2401 may input a speech uttered by the support target person by, for example, a push-to-talk method (described above). Alternatively, the speech collector 2401 may input a speech by detecting a silent period in consideration of difficulty in adding a mechanical button to a wearable device and possibility of failing to collect a speech due to forgetting button operation.

The speech converter 2402 converts the speech of the support target person received by the speech collector 2401. The speech converter 2402 basically has the same functional configuration as the speech conversion device 100, and includes the speech-to-unit encoder 110 and the unit-to-speech decoder 120 that are subjected to preliminary learning and are not illustrated in Fig. 24, thereby converting speech waveform data on the support target person into a normal speech of a target speech. Processing of converting the speech of the support target person into the normal speech of the target speech is as described in Section B above, and details thereof are not described here.

The speech output unit 2403 includes a speaker that outputs sound into the air, and reproduces and outputs a reproduced speech as a result of speech conversion.

For example, for a support target person whose vocal cord is extracted, the utterance support device 2400 can reconstruct a normal speech of the support target person before extraction from a whisper after the extraction by causing the speech converter 2402 or the unit-to-speech decoder 120 inside it to learn using speech data on the person itself left before the extraction.

Fig. 25 illustrates a functional configuration of another utterance support device 2500 to which an embodiment of the present disclosure is applied.

The utterance support device 2500 illustrated includes a speech collector 2501, a communicator 2502, and a speech output unit 2503. Although an external configuration of the utterance support device 2500 is not illustrated, at least the speech collector 2501 and the speech output unit 2503 are preferably disposed near the mouth of a support target person, and are preferably configured as a wearable device such as a headset worn on the head of the support target person, for example.

The speech collector 2501 and the speech output unit 2503 may be similar to those of the utterance support device 2400 illustrated in Fig. 24. However, unlike the utterance support device 2400, the utterance support device 2500 uses a server 2510 that provides a speech conversion service on a wide area network instead of mounting a speech converter.

The utterance support device 2500 causes the communicator 2502 to transmit a speech of a support target person received by the speech collector 2501 to the server 2510. The server 2510 basically has the same functional configuration as the speech conversion device 100, and includes the speech-to-unit encoder 110 and the unit-to-speech decoder 120 that are subjected to preliminary learning and are not illustrated in Fig. 25. The server 2510 converts speech waveform data on the support target person received from the utterance support device 2500 into a normal speech of a target speech, and then returns the normal speech to the utterance support device 2500. Processing of converting the speech of the support target person into the normal speech of the target speech in the server 2500 is as described in Section B above, and details thereof are not described here. Then, the utterance support device 2500 causes the communicator 2502 to receive a reproduced speech as a result of the speech conversion from the server 2510, and the speech output unit 2503 to reproduce and output speech data received by the communicator 2502.

It is assumed that the server 2510 provides the speech conversion service to multiple utterance support devices 2500. The server 2510 may provide a different target speech for each utterance support device, or for each support target person. In this case, the server 2510 accumulates a speech model obtained by preliminary learning for each target speech allocated to each support target person, or designated by each support target person, in a speech conversion database (not illustrated) in association with a conference participant or a conference terminal. Each time speech data is received from any one of the utterance support devices 2500, the server 2510 is only required to be configured to acquire a corresponding speech model from a speech conversion database to set the speech model in the unit-to-speech decoder 120, and convert the speech data into a normal speech of an appropriate target speech, thereby providing the normal speech to the utterance support devices 2500.

### E-3. Application to speech input interface

Speech input interfaces such as speech assistants and voice remote controllers are becoming widespread. Although the speech input interfaces are becoming widespread for reasons such as easier operation and hands-free operation than text input, the speech input interfaces have a problem of difficulty in using in public environments. Then, although some SSI technologies (e.g., see Non Patent Document 1) have been proposed, the SSI technologies have a problem of a large preparation load caused by necessity of a learning data set accompanied with text for recognition, the learning data set being required to obtain oral information at the time of occurrence using a special sensor configuration. In contrast, the speech input interface configured using the voice conversion technology according to an embodiment of the present disclosure can collect a whisper using a normal microphone without requiring a special sensor configuration, and thus having an advantage of reducing a preparation load for learning due to learning data using a whisper and a normal speech that are not paired, and speech data that requires no accompanying text label.

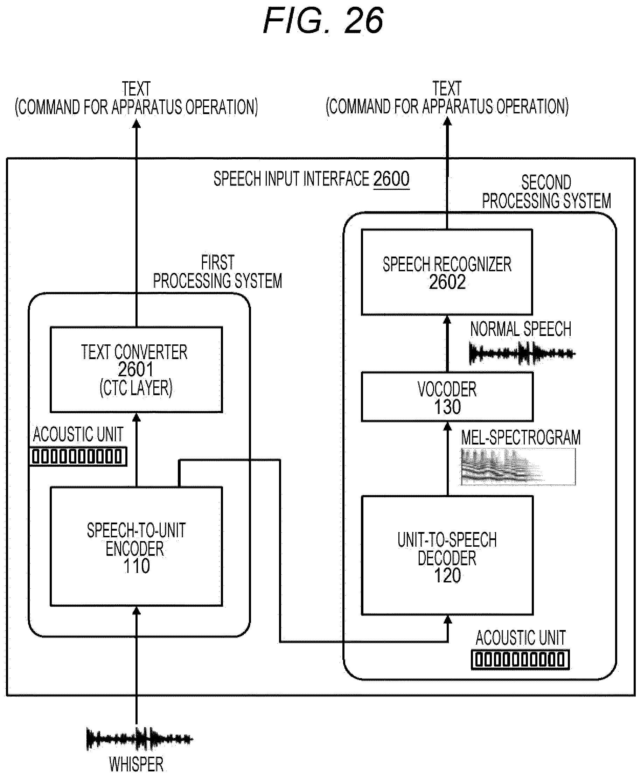

Fig. 26 schematically illustrates a functional configuration of a speech input interface 2600 using the speech conversion technology according to an embodiment of the present disclosure. The speech input interface 2600 illustrated includes a speech-to-unit encoder 110 and a unit-to-speech decoder 120 that are subjected to preliminary learning, and is configured to input a whisper and output a text. Processing of converting a whisper into the normal speech of the target speech is as described in Section B above, and thus is not described in detail here.

The speech input interface 2600 includes two processing systems for converting a whisper into a text. One of the processing systems includes a text converter 2601 that converts an acoustic unit generated from an input speech (whisper) by the speech-to-unit encoder 110 into a text and outputs the text. The text converter 2601 includes a CTC layer and the like. Then, the speech-to-unit encoder 110 and the text converter 2601 are finely adjusted together using a whisper corpus to enable a text to be estimated from a whisper. In a case where this processing system is used, the unit-to-speech decoder 120 is not used. The other of the processing systems further includes a speech recognizer 2602 disposed at a subsequent stage of the unit-to-speech decoder 120, the speech recognizer 2602 being configured to recognize a normal speech output from the unit-to-speech decoder 120 as a text. As the speech recognizer 2602, an existing speech recognition technology such as Google Cloud Speech-to-Text is only required to be used.

The speech interface 2600 can be used as a voice remote controller, for example. In this case, the text converter 2601 or the speech recognizer 2602 output a text that is used for operation of an apparatus as a text command for control target apparatuses (none of which are illustrated) such as a television, an audio device, an air conditioner, and a lighting device.

### E-4. Application to smartphone

Smartphones are already widespread, and almost one person uses one or more smartphones. Besides a call function, the smartphones can expand their functions by using various applications installed via download sites such as Apple Store and Google Play.

Using the call functions of the smartphones enables calling not only at indoor places such as a home and an office, but also at arbitrary places such as a place away from home and an outdoor place. However, when a user moves to a public environment and makes a call, the user becomes a nuisance to others, and call contents may be leaked. The public environment allows only a whisper at most, so that a conversation partner may have a difficulty in hearing.

Thus, applying the speech conversion technology according to an embodiment of the present disclosure to a smartphone enables the conversation partner to easily hear even a speech in a whisper uttered in a call by the user of the smartphone when the user moves to an environment such as a public environment with a difficulty in uttering a speech and makes the call, because the speech is converted into a normal speech inside the smartphone.

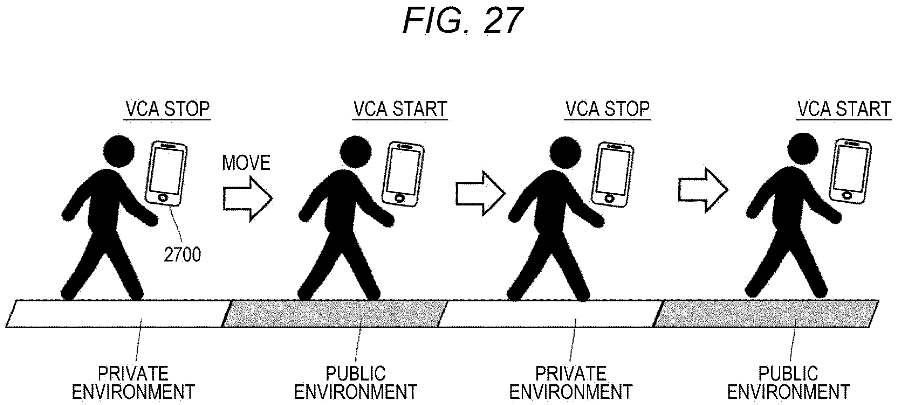

Fig. 27 schematically illustrates an operation example of a smartphone 2700 to which a speech conversion function according to an embodiment of the present disclosure is applied. It is here assumed that the speech conversion function for converting a whisper into a normal speech of a target speech is provided to the smartphone 2700 as an application for a smartphone (voice conversion application: VCA). The VCA includes functional modules corresponding to the respective speech-to-unit encoder 110 and unit-to-speech decoder 120. After installing the VCA in the smartphone 2700, the user performs preliminary learning of the unit-to-speech decoder 120 using a normal speech of the user as a target speech. Alternatively, the smartphone 2700 may be equipped with a speech conversion function as dedicated hardware instead of an application.

Fig. 27 illustrates the example in which a private environment and a public environment are alternately present in a space where the user is active. Fig. 27 illustrates the public environment with a floor surface in gray. The user can freely move between the private environment and the public environment by walking or the like during a call. Although an utterance with even a normal speech in the private environment has no problem, an utterance with a normal speech in the public environment causes problems such as trouble of others and leakage of confidential information.

When entering the public environment, the user activates the VCA of the smartphone 2700 and then makes a call in a whisper. Activating the VCA allows a speech uttered in a whisper by the user to be converted into a normal speech of the user in the smartphone 2700, and then the normal speech is transferred to a telephone (that may be either a smartphone or a fixed-line phone) of the conversation partner via a public line. Thus, the conversation partner can hear contents uttered in a whisper by the user as those in the normal speech of the user without discomfort. The VCA may be activated and stopped manually by the user each time the user moves between the private environment and the public environment, or the VCA may include a function of automatically activating and stopping the VCA on the basis of the environment recognition result.

### E-5. Application to avatar control system

As still another application example of an embodiment of the present disclosure, one user can simultaneously control multiple avatars in a virtual space.

An example of the simultaneous control of the multiple avatars allows a first avatar to speak in a normal speech of the user, and a second avatar to operate using a whisper of the user. The term here, "operate" of the avatar, includes various motions of the avatar, such as body motions and utterance of the avatar. Additionally, another example of the simultaneous control of the multiple avatars allows the first avatar to utter using the normal speech of the user, and the second avatar to utter using a whisper of the user.

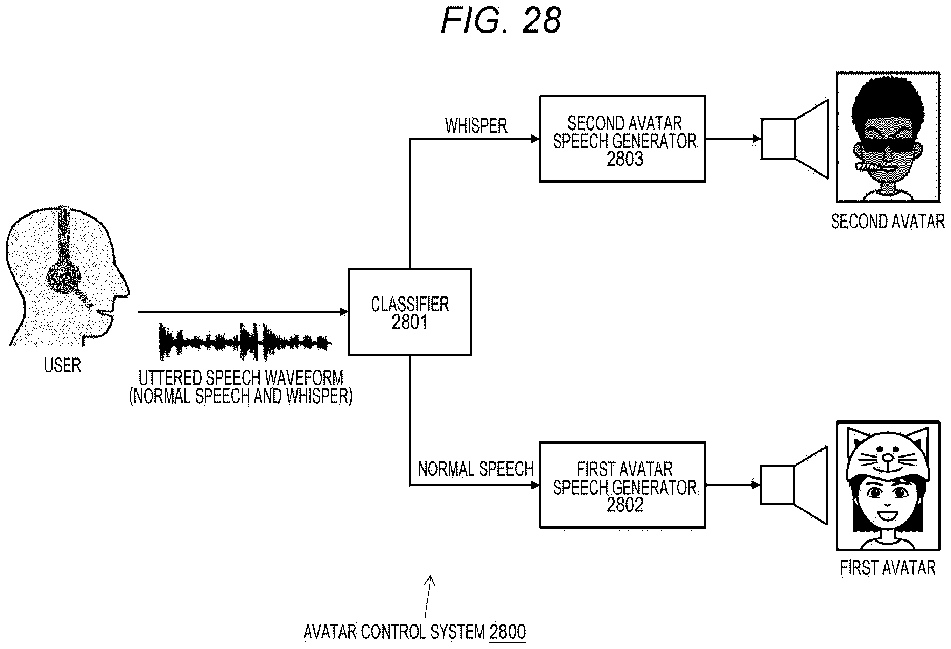

Fig. 28 schematically illustrates an example of a functional configuration of an avatar control system 2800 that is configured to incorporate functions of the speech conversion device 100 according to an embodiment of the present disclosure and simultaneously control multiple avatars. Hereinafter, operation of the avatar control system 2800 in a case where the first avatar utters using a normal speech of the user and the second avatar utters using a whisper of the user will be described.

A classifier 2801 classifies speeches of the user received from a microphone or a headset into a normal voice and a whisper on the basis of the amount of speech features, and distributes each of the speeches of the user to corresponding one of a first avatar speech generator 2802 and a second avatar speech generator 2803 in the subsequent stage. The classifier 2801 has a function of classifying an input speech into a normal speech and a whisper on the basis of the amount of speech features. The classifier 2801 partially shares the neural network (CNN feature extractor 111) with the speech-to-unit encoder 110, so that the avatar control system 2800 is reduced in network size as a whole. The classifier 2801 may be similar in configuration to the classification device 2201 illustrated in Fig. 23, and thus is not described in detail here.

The first avatar speech generator 2802 applies speech conversion to a speech signal classified into the normal speech by the classifier 2801 to generate a speech of the first avatar. Any algorithm is available for converting a normal speech into another speech, and thus a currently available voice changer may be utilized.

Then, the second avatar speech generator 2808 generates a speech of the second avatar on the basis of a speech signal classified into the whisper by the classifier 2801. The second avatar speech generator 2808 basically has the same functional configuration as the speech conversion device 100, and includes the speech-to-unit encoder 110 and the unit-to-speech decoder 120 that are subjected to preliminary learning and are not illustrated in Fig. 22. The unit-to-speech decoder 120 is subjected to preliminary learning using the speech of the second avatar as a target speech. Then, the second avatar speech generator 2808 converts speech waveform data on the whisper sorted by the classifier 2801 into a normal speech of the target speech.

### INDUSTRIAL APPLICABILITY

The present disclosure has been described in detail above with reference to the specific embodiments. However, the present disclosure should not be construed as being limited to the above-described embodiments, and those skilled in the art obviously can make modifications and substitutions of the embodiments without departing from the gist of the present disclosure. Additionally, the effects described herein are each merely an example, so that the effects brought by an embodiment of the present disclosure are not limited and may include an additional effect that is not described herein.

Although the embodiment in which the present disclosure is applied to the speech conversion technology for generating a normal speech from a whisper has been mainly described herein, the gist of the present disclosure is not limited thereto. An embodiment of the present disclosure enables converting speeches of various utterance methods, including a whisper and a faint speech, into speeches of any target speaker.

Learning of the speech-to-unit encoder used in the speech conversion technology according to an embodiment of the present disclosure uses only speech data on a whisper and a normal speech that are not paired, and does not require a text label attached to the speech data or parallel data corresponding to the whisper and the normal speech, thereby reducing a preparation load.

The unit-to-speech decoder that is used in the speech conversion technology according to an embodiment of the present disclosure and that is subjected to learning with a normal voice of an arbitrary target speaker enables constructing a speech conversion device that converts a whisper or a faint speech into the normal speech of the arbitrary target speaker. For example, for a person whose vocal cord is extracted, a normal speech before extraction can be reconstructed from a whisper after the extraction by causing the unit-to-speech decoder to learn using speech data on the person itself left before the extraction. As a matter of course, another speech conversion device can be constructed in which a normal speech of a certain speaker is converted into a normal speech of another speaker.

The speech conversion technology according to an embodiment of the present disclosure can be applied to various technical fields and industrial fields. For example, the speech conversion technology can be applied to a remote conference system, a support device for speech impairment and hearing impairment, a smartphone or a voice remote controller corresponding to a whisper (or a speech of any utterance method), avatar control, and the like.

In short, the present disclosure has been described in the form of exemplification, and thus the contents described herein should not be construed in a limited manner. To determine the gist of the present disclosure, the scope of claims should be taken into consideration.

Note that the series of processing described herein can be performed by hardware, software, or a configuration in which hardware and software are combined. In a case of performing processing using software, the processing is performed according to a program in which a processing sequence related to implementation of the present disclosure is recorded, the program being installed in a memory in a computer incorporated in dedicated hardware. Processing related to implementation of the present disclosure also can be performed by installing a program in a general-purpose computer capable of performing various types of processing and causing the computer to execute the program.

The program can be preliminarily stored in a recording medium provided in the computer, such as an HDD, an SSD, or a ROM. Alternatively, the program can be temporarily or permanently stored in a removable recording medium such as a flexible disk, a compact disc read only memory (CD-ROM), a magneto optical (MO) disk, a digital versatile disc (DVD), a Blu-ray Disc (BD) (registered trademark), a magnetic disk, or a universal serial bus (USB) memory. Using such a removable recording medium enables providing a program related to implementation of the present disclosure as so-called package software.

Additionally, the program may be transferred from a download site to a computer in a wireless or wired manner via a network such as a wide area network (WAN) typified by a cellular network, a local area network (LAN), or the Internet. The computer can receive the program thus transferred and cause the program to be installed in a mass storage device such as an HDD or an SSD in the computer.

Note that the present disclosure can have the following configurations.
(1) An information processing device including:
   a speech-to-unit encoder that generates an acoustic unit from a speech waveform; and
   a unit-to-speech decoder that reconstructs a speech waveform from an acoustic unit.
(2) The information processing device according to section (1) described above, in which
   the speech-to-unit encoder is subjected to preliminary learning with a normal speech and a whisper to generate a common acoustic unit to the normal speech and the whisper, the common acoustic unit being a latent expression absorbing a difference between the normal speech and the whisper.
(3) The information processing device according to any one of sections (1) and (2) described above,
   in which the unit-to-speech decoder is subjected to learning using speech data without an accompanying text label of a specific speaker.
(4) The information processing device according to any one of sections (1) to (3) described above, further including: a first learning unit configured to learn the speech-to-unit encoder by using a normal speech and a whisper without an accompanying text label of a specific speaker to generate an acoustic unit common to the normal speech and the whisper, the acoustic unit being a latent expression in which a difference between the normal speech and the whisper is absorbed.
(5) The information processing device according to section (4) described above, in which
   the first learning unit acquires a speech model to be used in the speech-to-unit encoder by self-supervised learning of a masked language model type in which a part of an input is masked and the masked part is estimated from other related information.
(6) The information processing device according to any one of sections (4) and (5) described above, in which
   the first learning unit performs learning using learning data including a mixture of a whisper and a normal speech that are accompanied with no text and are not paired.
(7) The information processing device according to any one of sections (4) to (6) described above, in which
   the first learning unit performs self-supervised learning of a masked language model type on the speech-to-unit displacement unit.
(8) The information processing device according to section (7) described above, in which
   the first learning unit performs self-supervised learning of a masked language model type on a transformer layer included in the speech-to-unit displacement unit.
(9) The information processing device according to any one of sections (1) to (8) described above, in which
   the speech-to-unit encoder is configured on the basis of self-supervised speech representation learning by masked prediction of hidden units (HuBERT).
(10) The information processing device according to any one of sections (1) to (9) described above, further including
   a second learning unit that learns the unit-to-speech decoder to generate a mel-spectrogram of a target speech from an acoustic unit.
(11) The information processing device according to section (10) described above, in which
   the second learning unit learns the unit-to-speech decoder by using a first loss function based on a difference between a mel-spectrogram obtained by converting an acoustic unit by the unit-to-speech decoder, the acoustic unit being generated from a target speech by the speech-to-unit encoder, and a mel-spectrogram generated from the target speech.
(12) The information processing device according to any one of sections (10) and (11) described above, in which
   the unit-to-speech decoder includes a pitch predictor that predicts prosody of a speech from an acoustic unit and an energy predictor that predicts acoustic intensity from the acoustic unit, and
   the second learning unit learns the pitch predictor and the energy predictor by using a second loss function based on a difference between prosody and acoustic intensity predicted by the pitch predictor and the energy predictor, respectively, for an acoustic unit generated from a target speech by the speech-to-unit encoder, and prosody and acoustic intensity directly extracted from the target speech.
(13) The information processing device according to any one of sections (10) to (12) described above, in which
   the second learning unit performs learning by using an acoustic unit generated from a target speech by the speech-to-unit encoder frozen.
(13-1) The information processing device according to any one of sections (10) to (12) described above, in which
   the unit-to-speech decoder is configured on the basis of fast and high-quality end-to-end text to speech (FastSpeed2).
(14) The information processing device according to any one of sections (10) to (13) described above, in which
   the unit-to-speech decoder further includes a vocoder that reconstructs a mel-spectrogram into a speech waveform.
(15) An information processing method including:
   a speech-to-unit conversion step of generating an acoustic unit from a speech waveform; and
   a unit-to-speech conversion step of reconstructing a speech waveform from an acoustic unit.
(16) A computer program that is described in a computer-readable format to allow a computer to function
   as:
      a speech-to-unit encoder that generates an acoustic unit from a speech waveform; and
      a unit-to-speech decoder that reconstructs a speech waveform from an acoustic unit.
(17) A learning device that learns a speech-to-unit encoder that generate an acoustic unit from a speech waveform,
   the learning device being configured to learn the speech-to-unit encoder to generate an acoustic unit common to a normal speech and a whisper, the acoustic unit being a latent expression in which a difference between the normal speech and the whisper is absorbed, by self-supervised learning of a Masked Language Model type using a normal speech and a whisper in which a part of an input is masked and the masked part is estimated from other related information.
(17-1) The learning device according to section (17) described above, in which
   self-supervised learning of a masked language model type is performed on a transformer layer included in the speech-to-unit displacement device.
(17-2) The learning device according to section (17) described above, in which
   the speech-to-unit displacement device is configured on the basis of self-supervised speech representation learning by masked prediction of hidden units (HuBERT).
(18) A learning device that learns a unit-to-speech decoder that reconstructs a speech waveform from an acoustic unit, the learning device being configured to learn the unit-to-speech decoder using a first loss function based on a difference between a mel-spectrogram generated by the unit-to-speech decoder using an acoustic unit generated from a target speech using a frozen model and a mel-spectrogram generated from the target speech.
(19) The learning device according to section (18) described above, in which
   the unit-to-speech decoder includes a pitch predictor that predicts prosody of a speech from an acoustic unit and an energy predictor that predicts acoustic intensity from the acoustic unit, and
   learning of the pitch predictor and the energy predictor using a loss function (second loss function) is further performed, the loss function being based on a difference between prosody and acoustic intensity of the target speech predicted by the pitch predictor and the energy predictor, respectively, using the acoustic unit generated from the target speech, and prosody and acoustic intensity directly extracted from the target speech.
(20) A remote conference system including:
   multiple conference terminals that are interconnected; and
   a speech conversion device that converts a speech input by each of the conference terminals,
   the speech conversion device including: a speech-to-unit encoder that generates an acoustic unit independent of an utterance method from a speech waveform; and a unit-to-speech decoder that reconstructs a speech waveform of a target speaker from an acoustic unit.
(20-1) The remote conference system according to section (20) described above, in which
   the speech conversion device is mounted for each of the multiple conference terminals or is shared by the multiple conference terminals.
(21) A support device including:
   a speech collector that collects a speech of a speaker;
   a speech converter that converts a speech input in the speech collector; and
   a speech output unit that reproduces and outputs the speech converted by the speech converter,
   the speech converter including: a speech-to-unit encoder that generates an acoustic unit independent of an utterance method from a speech waveform; and a unit-to-speech decoder that reconstructs a speech waveform of a target speaker from an acoustic unit.

### REFERENCE SIGNS LIST

- 100: Speech conversion device
- 110: Speech-to-unit encoder
- 111: CNN feature extractor
- 112: Transformer layer
- 120: Unit-to-speech decoder
- 121: Transformer layer (multiple layers)
- 122: Pitch predictor
- 123: Energy predictor
- 124: Mel-spectrogram decoder
- 130: Vocoder
- 201: Acoustic unit discovery part
- 400: Automatic speech recognizer
- 401: Projection layer
- 402: CTC layer
- 2000: Information processing device
- 2001: CPU
- 2002: ROM
- 2003: RAM
- 2004: Host bus
- 2005: Bridge
- 2006: Expansion bus
- 2007: Interface unit
- 2008: Input unit
- 2009: Output unit
- 2010: Storage unit
- 2011: Drive
- 2012: Removable recording medium
- 2013: Communicator
- 2100: Server
- 2201: Classification device
- 2202: Whisper processor
- 2203: Speech conversion database
- 2204: Normal speech processor
- 2205: Transmitter
- 2301: Normalization layer (Layer Norm)
- 2302: Average pooling layer (Avg Pool)
- 2303, 2304: Fully connected (FC) layer
- 2305: Output layer (LogSoftmax)
- 2400: Utterance support device
- 2401: Speech collector
- 2402: Speech converter
- 2403: Speech output unit
- 2500: Utterance support device
- 2501: Speech collector
- 2502: Communicator
- 2503: Speech output unit
- 2510: Server
- 2601: Text converter
- 2602: Speech recognizer
- 2800: Avatar control system
- 2801: Classifier
- 2802: First avatar speech generator
- 2803: Second avatar speech generator

## Claims

1. An information processing device comprising:
a speech-to-unit encoder that generates an acoustic unit from a speech waveform; and
a unit-to-speech decoder that reconstructs a speech waveform from an acoustic unit.

2. The information processing device according to claim 1, wherein
the speech-to-unit encoder is subjected to preliminary learning with a normal speech and a whisper to generate a common acoustic unit to the normal speech and the whisper, the common acoustic unit being a latent expression absorbing a difference between the normal speech and the whisper.

3. The information processing device according to claim 1, wherein
the unit-to-speech decoder is subjected to learning using speech data without an accompanying text label of a specific speaker.

4. The information processing device according to claim 1, further comprising:
a first learning unit configured to learn the speech-to-unit encoder by using a normal speech and a whisper without an accompanying text label of a specific speaker to generate an acoustic unit common to the normal speech and the whisper, the acoustic unit being a latent expression in which a difference between the normal speech and the whisper is absorbed.

5. The information processing device according to claim 4, wherein
the first learning unit acquires a speech model to be used in the speech-to-unit encoder by self-supervised learning of a masked language model type in which a part of an input is masked and the masked part is estimated from other related information.

6. The information processing device according to claim 4, wherein
the first learning unit performs learning using learning data including a mixture of a whisper and a normal speech that are accompanied with no text and are not paired.

7. The information processing device according to claim 4, wherein
the first learning unit performs self-supervised learning of a masked language model type on the speech-to-unit displacement unit.

8. The information processing device according to claim 7, wherein
the first learning unit performs self-supervised learning of a masked language model type on a transformer layer included in the speech-to-unit displacement unit.

9. The information processing device according to claim 1, wherein
the speech-to-unit encoder is configured on a basis of self-supervised speech representation learning by masked prediction of hidden units (HuBERT).

10. The information processing device according to claim 1, further comprising:
a second learning unit that learns the unit-to-speech decoder to generate a mel-spectrogram of a target speech from an acoustic unit.

11. The information processing device according to claim 10, wherein
the second learning unit learns the unit-to-speech decoder by using a first loss function based on a difference between a mel-spectrogram obtained by converting an acoustic unit by the unit-to-speech decoder, the acoustic unit being generated from a target speech by the speech-to-unit encoder, and a mel-spectrogram generated from the target speech.

12. The information processing device according to claim 10, wherein
the unit-to-speech decoder includes a pitch predictor that predicts prosody of a speech from an acoustic unit and an energy predictor that predicts acoustic intensity from the acoustic unit, and
the second learning unit learns the pitch predictor and the energy predictor by using a second loss function based on a difference between prosody and acoustic intensity predicted by the pitch predictor and the energy predictor, respectively, for an acoustic unit generated from a target speech by the speech-to-unit encoder, and prosody and acoustic intensity directly extracted from the target speech.

13. The information processing device according to claim 10, wherein
the second learning unit performs learning by using an acoustic unit generated from a target speech by the speech-to-unit encoder frozen.

14. The information processing device according to claim 10, wherein
the unit-to-speech decoder further includes a vocoder that reconstructs a mel-spectrogram into a speech waveform.

15. An information processing method comprising:
a speech-to-unit conversion step of generating an acoustic unit from a speech waveform; and
a unit-to-speech conversion step of reconstructing a speech waveform from an acoustic unit.

16. A computer program that is described in a computer-readable format to allow a computer to function as:
a speech-to-unit encoder that generates an acoustic unit from a speech waveform; and
a unit-to-speech decoder that reconstructs a speech waveform from an acoustic unit.

17. A learning device that learns a speech-to-unit encoder that generates an acoustic unit from a speech waveform,
the learning device being configured to learn the speech-to-unit encoder to generate an acoustic unit common to a normal speech and a whisper, the acoustic unit being a latent expression in which a difference between the normal speech and the whisper is absorbed, by self-supervised learning of a Masked Language Model type using a normal speech and a whisper in which a part of an input is masked and the masked part is estimated from other related information.

18. A learning device that learns a unit-to-speech decoder that reconstructs a speech waveform from an acoustic unit,
the learning device being configured to learn the unit-to-speech decoder using a first loss function based on a difference between a mel-spectrogram generated by the unit-to-speech decoder using an acoustic unit generated from a target speech using a frozen model and a mel-spectrogram generated from the target speech.

19. The learning device according to claim 18, wherein
the unit-to-speech decoder includes a pitch predictor that predicts prosody of a speech from an acoustic unit and an energy predictor that predicts acoustic intensity from the acoustic unit, and
learning of the pitch predictor and the energy predictor using a loss function (second loss function) is further performed, the loss function being based on a difference between prosody and acoustic intensity of the target speech predicted by the pitch predictor and the energy predictor, respectively, using the acoustic unit generated from the target speech, and prosody and acoustic intensity directly extracted from the target speech.

20. A remote conference system comprising:
multiple conference terminals that are interconnected; and
a speech conversion device that converts a speech input by each of the conference terminals
the speech conversion device including:
a speech-to-unit encoder that generates an acoustic unit independent of an utterance method from a speech waveform; and
a unit-to-speech decoder that reconstructs a speech waveform of a target speaker from an acoustic unit.

21. A support device comprising:
a speech collector that collects a speech of a speaker;
a speech converter that converts a speech input in the speech collector; and
a speech output unit that reproduces and outputs the speech converted by the speech converter,
the speech converter including:
a speech-to-unit encoder that generates an acoustic unit independent of an utterance method from a speech waveform; and
a unit-to-speech decoder that reconstructs a speech waveform of a target speaker from an acoustic unit.
